# EUROPEAN PATENT APPLICATION

(11) **EP 1 204 054 A2**
(43) Date of publication of application: **08.05.2002**
(21) Application number: 01125438.0
(22) Date of filing: 02.11.2001
(51) Int. Cl.: G06F 17/60

(54) **Contents delivery method, and server, terminal and computer program therefor**

(30) Priority: 02.11.2000 JP 2000336301; 08.03.2001 JP 2001065504; 26.10.2001 JP 2001328766
(71) Applicant: MATSUSHITA ELECTRIC INDUSTRIAL CO., LTD, Kadoma-shi, Osaka 571-0000 (JP)
(72) Inventor: Sugiura, Masataka, Tokyo 158-0082 (JP); Hatano, Koji, Tokyo 134-0088 (JP); Kobayashi, Susumu, Kyoutanabe-shi, Kyoto 610-0354 (JP); Harada, Syunji, Osaka-shi, Osaka 557-0045 (JP); Morozumi, Masahide, Yokohama-shi, Kanagawa 224-0029 (JP)
(74) Representative: Casalonga, Axel

(57) **Abstract**

The present invention provides a contents delivery method and a server, terminal and computer program to be used for the contents delivery method, which are capable of achieving re-delivery of contents and others efficiently and strictly. In a contents delivery method of delivering contents from a server (10) through a network (30) to a terminal (40), when receiving the delivery of the contents, the terminal retains an electronic receipt (71) including at least its own identifier, an identifier of the contents purchased, an identifier of the terminal or a user and information on purchase date/time, issued by the server. The terminal transmits the electronic receipt to the server when making a request for the re-delivery of the contents. This method can enhance the efficiency of the delivery processing or re-delivery processing of contents, and enables high-security and high-reliability contents delivery or re-delivery through simple operations of the terminal.

## Description

### TECHNICAL FIELD

The present invention relates to a delivery method of delivering, through a network, contents such as music, picture and game a user has made purchases of, and further relates to a server, terminal and computer program to be used for the delivery method.

### RELATED ART

In the recent years, the widespread use of the internet has caused business modes or models to appear for dealing in, through the internet or the like, contents such as video file, audio file and software, with these business modes being prone to further increase in future.

In this case, the duplicate of the delivered contents on the client side is prohibited for the purpose of the protection of the copyright on the contents. However, in a case in which the data on the contents delivered includes an error or if a user destroys the data inadvertently, it is a general operation to re-deliver the contents free of charge.

The decision on the acceptability of the request for this re-delivery depends on the management of the trade history on the server side.

Japanese Patent Laid-Open No. HEI 11-224288 discloses a system in which, prior to sales of contents, a written consent on use conditions, which describes contents specifying information, contents re-delivery conditions and others, is exchanged with a user and the use conditions are managed in the form of a list on the server side. When making a request for the re-delivery of the contents, the user gains access to a server for displaying the use condition list on a client terminal and selecting the use condition on the relevant contents to transmit it to the server. The server implements the re-delivery of the contents when the re-delivery request satisfies the use condition.

In addition, Japanese Patent Laid-Open No. HEI 6-251146 discloses an arrangement in which, when a vending machine, dealing in electronic information such as character, voice and picture as commodities, outputs the electronic information to a recording medium belonging to the user who made a purchase of the electronic information, a receipt corresponding to this electronic information is printed out so that, even in a case in which a loss occurs on the electronic information forming a formless due to an unexpected cause, the receipt can testify to the fact of the purchase and sale.

However, the conventional method of managing the use condition list on the server side requires a complicated procedure for realizing the purchase of the contents or the re-delivery of the contents; therefore, there arises a problem of increasing the traffic volume between the server and the client.

Moreover, the conventional method of printing out a receipt at the purchase of the electronic information is not suitable for use in a mode in which contents are downloaded directly from the server to the user's terminal. Add to it that a design to automatically make a decision on the right of the re-delivery of the contents on the basis of the receipt printed out does not reach the systematization yet.

Still moreover, under the current progressing work subdivision situation, such as into a server for making a specialty of the sales of the contents, a server for storing the contents, a server for taking a charge of accounting and other servers, on the contents provider side, there is a need to construct a system capable of, even under such situations, making the connection/adjustment among the servers with as little traffic volume as possible while maintaining the closer cooperation among the servers, thereby achieving the effective delivery of the contents.

### SUMMARY OF THE INVENTION

The present invention has been developed with a view to eliminating these conventional problems, and it is therefore an object of the invention to provide a contents delivery method capable of achieving the delivery or re-delivery of contents (or content) in an efficient and strict manner.

For this purpose, according to the present invention, in a contents delivery method of delivering contents from a server through a network to a terminal, the terminal receiving the delivery of the contents retains an electronic receipt including at least an identifier of the receipt, an identifier of the contents purchased, an identifier of the terminal or a user and information on purchase date and time, issued from the server in the form of electronic data, and when a request is made for re-delivery of the contents, the electronic receipt is sent to the server.

In this method, due to the use of the electronic receipt, it is possible to enhance the effectiveness of the delivery processing or re-delivery processing of contents, and further to conduct the contents delivery or re-delivery processing with high security and high reliability through an easy operation of the terminal itself.

In addition, in a contents delivery method of delivering contents from a server through a network to a terminal, after each processing section of the server conducts processing in response to a request from the terminal, an electronic receipt including information indicative of processing completion in the each processing section or an electronic receipt uniquely signed by the each processing section is transmitted to the terminal, and upon receipt of the electronic receipt, the terminal transmits a request with the electronic receipt.

If this delivery method is applied to processing sections of a plurality of servers which accomplish the delivery of the contents while dealing with partial work assigned thereto, then the delivery or re-delivery of the contents becomes feasible with high efficiency and high security.

### BRIEF DESCRIPTION OF THE DRAWINGS

The above-mentioned features, configurations and effects of the present invention will become more readily apparent from the following description of the embodiments taken in conjunction with the accompanying drawings.
FIG. 1 is a block diagram showing a configuration of a system according to a first embodiment;
FIG. 2 is an illustration of an example of the information contents of an electronic receipt according to the first embodiment;
FIG. 3 is an illustration of a sequence in the system according to the first embodiment;
FIG. 4 is an illustration of a second sequence in the system according to the first embodiment;
FIG. 5 is an illustration of a second example of the information contents of the electronic receipt according to the first embodiment;
FIG. 6 is an illustration of a third sequence in the system according to the first embodiment;
FIG. 7 is a block diagram showing a configuration of a second system according to the first embodiment;
FIG. 8 is a block diagram showing a configuration of a third system according to the first embodiment;
FIG. 9 is an illustration of a third example of the information contents of the electronic receipt according to the first embodiment;
FIG. 10 is an illustration of a sequence in a system according to a second embodiment;
FIG. 11 is an illustration of a second sequence in the system according to the second embodiment;
FIG. 12 is an illustration of a third sequence in the system according to the second embodiment;
FIG. 13 is a block diagram showing a configuration of a system according to a third embodiment;
FIG. 14 is an illustration of an example of the information contents of an electronic receipt according to the third embodiment;
FIG. 15 is an illustration of a second example of the information contents of the electronic receipt according to the third embodiment;
FIG. 16 is a block diagram showing a configuration of a second system according to the third embodiment;

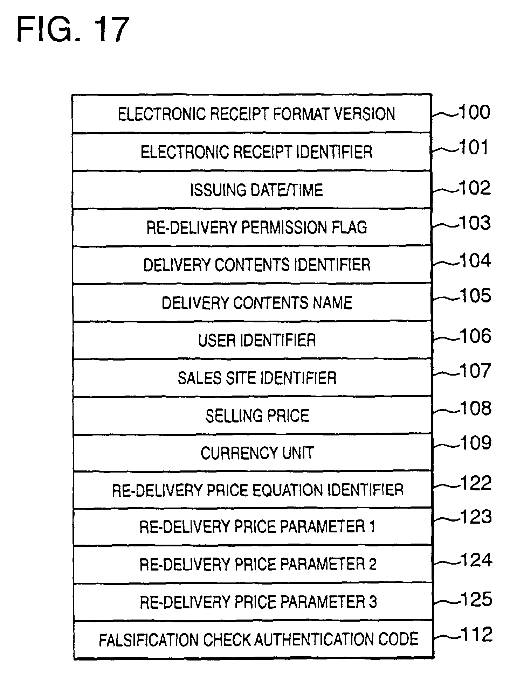

FIG. 17 is an illustration of a third example of the information contents of the electronic receipt according to the third embodiment;
FIG. 18 is a block diagram showing a configuration of a system according to a fourth embodiment;
FIG. 19 is an illustration of an example of the information contents of an electronic receipt according to the fourth embodiment;
FIG. 20 is an illustration of a sequence in a system according to a fifth embodiment;
FIG. 21 is an illustration of an example of the information contents of an electronic receipt according to the fifth embodiment;
FIGs. 22A and 22B are illustrations of sequences in a system according to a sixth embodiment;
FIG. 23 is an illustration of an example of the information contents of an electronic receipt according to a seventh embodiment;
FIG. 24 is an illustration of a sequence in a system according to the seventh embodiment;
FIG. 25 is a block diagram showing a configuration of a system according to an eighth embodiment;
FIG. 26 is a sequence diagram showing a first delivery flow according to the eighth embodiment;
FIG. 27 is a sequence diagram showing a second delivery flow according to the eighth embodiment;
FIG. 28 is an illustration of an example 1 of the information contents of an electronic receipt according to the eighth embodiment;
FIG. 29 is an illustration of an example 2 of the information contents of the electronic receipt according to the eighth embodiment;
FIG. 30 is an illustration of an example 3 of the information contents of the electronic receipt according to the eighth embodiment;
FIG. 31 is an illustration of an example 4 of the information contents of the electronic receipt according to the eighth embodiment;
FIG. 32 is a block diagram showing a configuration of a system according to a ninth embodiment;
FIG. 33 is a sequence diagram showing a first re-delivery flow according to the ninth embodiment;
FIG. 34 is a sequence diagram showing a second re-delivery flow according to the ninth embodiment;
FIG. 35 is a block diagram showing a configuration of a system according to a tenth embodiment;
FIG. 36 is a sequence diagram showing a delivery flow according to the tenth embodiment;
FIG. 37 is an illustration of an example 1 of the information contents of an electronic receipt according to the tenth embodiment;
FIG. 38 is an illustration of an example 2 of the information contents of an electronic receipt according to the tenth embodiment;
FIG. 39 is a block diagram showing a configuration of a system according to an eleventh embodiment;
FIG. 40 is a sequence diagram showing a re-delivery flow according to the eleventh embodiment;
FIG. 41 is a sequence diagram showing a delivery flow according to a twelfth embodiment;
FIG. 42 is an illustration of an example 1 of the information contents of an electronic receipt according to the twelfth embodiment;
FIG. 43 is an illustration of an example 2 of the information contents of the electronic receipt according to the twelfth embodiment;
FIG. 44 is a block diagram showing a configuration of a system according to a thirteenth embodiment;
FIG. 45 is a sequence illustration 1 of a delivery flow according to the thirteenth embodiment;
FIG. 46 is a sequence illustration 2 of a delivery flow according to the thirteenth embodiment;
FIG. 47 is a sequence illustration of a comparison delivery flow for showing the effects of the thirteenth embodiment;
FIG. 48 is an illustration of an example 1 of the information contents of a decryption title deed according to the thirteenth embodiment;
FIG. 49 is an illustration of an example 2 of the information contents of a decryption title deed according to the thirteenth embodiment;
FIG. 50 is a block diagram showing a configuration of a system according to a fourteenth embodiment;
FIG. 51 is a sequence illustration of a delivery flow according to the fourteenth embodiment;
FIG. 52 is a sequence illustration of a re-delivery flow according to the fourteenth embodiment;
FIGs. 53A to 53D are sequence illustrations of four delivery flows including other examples (patterns 1 to 4) of timings at which a decryption title deed is transmitted from a server side to a terminal;
FIGs. 54A to 54D are sequence illustrations of four delivery flows including other examples (patterns 5 to 8) of timings at which a decryption title deed is transmitted from a server side to a terminal;
FIGs. 55A to 55C are sequence illustrations of three delivery flows including other examples (patterns 9 to 11) of timings at which a decryption title deed is transmitted from a server side to a terminal;
FIG. 56 is a block diagram showing an accounting operation in the case of a credit settlement, as an example of accounting according to the embodiments; and
FIGs. 57A and 57B are illustrations of sequence charts showing two concrete examples according to the seventh embodiment.

### DETAILED DESCRIPTION OF VARIOUS EMBODIMENTS

### (First Embodiment)

In a contents delivery method according to the present invention, a server, which has dealt in the contents, issues an electronic receipt to a terminal of a user who has made a purchase of the contents. When making a request for re-delivery of the contents, the user sends the electronic receipt forming electronic data from the terminal to the server, and the server makes a decision on the right of the re-delivery on the basis of the electric receipt.

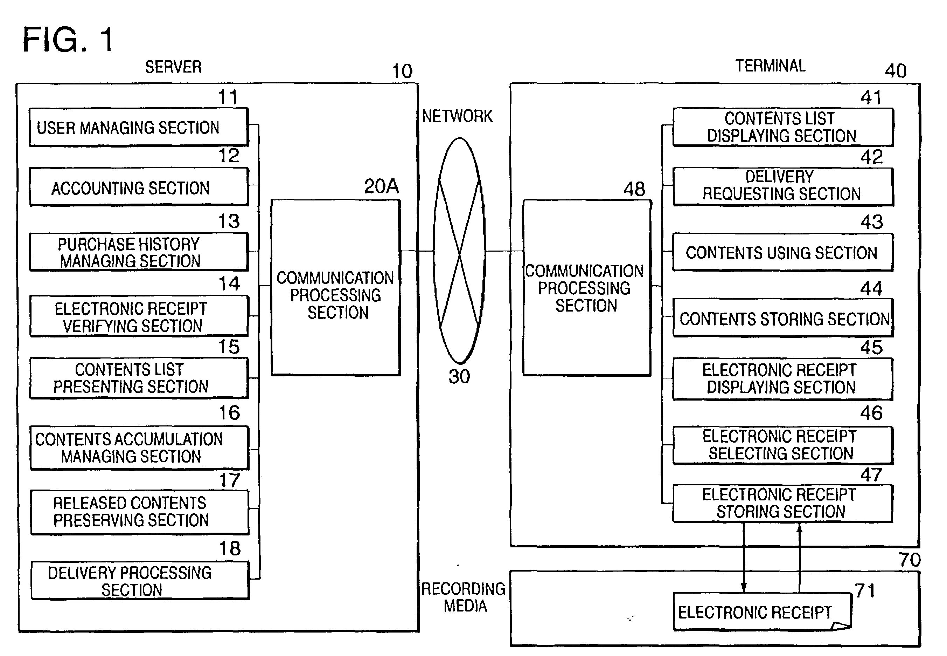

A system for implementing a contents delivery method according to a first embodiment is, as shown in FIG. 1, made up of a server 10 which provides contents and a terminal 40 which receives the delivery of the contents from the server 10 through a network 30. Each of the server 10 and the terminal 40 includes a CPU (Central Processing Unit), memory, interface, display and other units (not shown), with the CPU being made to conduct predetermined operations in accordance with a program stored in the memory. Incidentally, the same reference numerals or signs in the illustrations, used for the description of the components or procedures in the diverse embodiments, basically represent the same arrangements or contents.

The server 10 is composed of a user managing section 11 for managing user information, an accounting section 12 for conducting accounting to issue an electronic receipt, a purchase history managing section 13 for managing purchase history information, an electronic receipt verifying section 14 for verifying an electronic receipt sent from the terminal 40, a contents accumulation managing section 16 for accumulatively managing contents on sale, a contents list presenting section 15 for making out a list menu on contents on sale to present it on a portal site, a released contents preserving section 17 for preserving contents after the elapse of a release period on the portal site, a delivery processing section 18 for conducting the delivery processing of contents to the terminal 40, and a communication processing section 20A for establishing a connection between the above-mentioned sections 11 to 18 and the network 30 to make communication with the terminal.

On the other hand, the terminal 40 is composed of a contents list displaying section 41 having a browser function for displaying contents presentation information, a delivery requesting section 42 for making a request for the delivery or re-delivery of contents to the server 10, a contents storing section 44 for storing the delivered contents, a contents using section 43 for using the delivered contents in a seeing, hearing or conducting manner, an electronic receipt storing section 47 for storing an electronic receipt received from the server 10, an electronic receipt displaying section 45 for displaying the electronic receipt, an electronic receipt selecting section 46 for selecting an electronic receipt when making a request for re-delivery, and a communication processing section 48 for controlling communications with the server 10. In this case, an electronic receipt 71, stored in the electronic receipt storing section 47, can also be recorded on recording media (medium) 70 for backup.

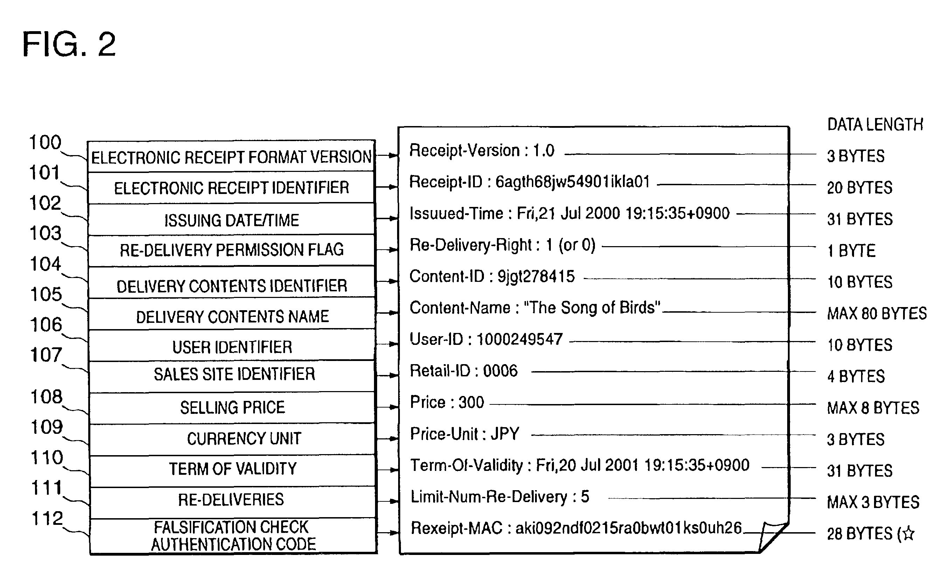

As FIG. 2 shows, on an electronic receipt, there are described an electronic receipt format version number 100, an electronic receipt identifier 101 for specifying an electronic receipt, an electronic receipt issuing date/time 102, a re-delivery permission flag 103 for indicating permission/no permission of re-delivery, a delivery contents identifier 104 serving as code data for specifying delivery contents, a delivery contents name (title of music or movie) 105, a user identifier 106 for specifying a user who makes a purchase of contents, a sales site identifier 107 for specifying a site where contents have been sold, a selling price 108 expressed by a numeral, a currency unit 109 on the selling price, a term of validity 110 of the electronic receipt, and re-deliveries 111 indicative of the limited number of times of the re-delivery of contents, and further described a falsification check authentication code (MAC: Message Authentication Code) 112 generated on the basis of data on the electronic receipt. Although the example of FIG. 2 shows a case in which a format is text file, it is also possible to describe them in an XML form. A concrete example of the description contents is shown on the right side of each of the item names, and the maximum data size is indicated with bytes on the further right side. In the description example shown, the size of the entire electronic receipt is 359 bytes, and if all the items assume the maximum size, the total size reaches 427 bytes.

The falsification check authentication code 112 is obtained by performing a hash calculation using a one-way function with respect to the data contents of an electronic receipt and encrypting the calculated value. For example, for the encryption, a private key or public key of the server 10, or a private common key between the terminal 40 and the server 10, is put to use. Incidentally, FIG. 2 shows a case in which SHA-1 acts as the hash calculation function. Although 160-bit (20-byte) binary data is obtained as the output of the SHA-1 function, due to the Base64 encoding for embedding this in a text file of the electronic receipt, the size of the falsification check authentication code 112 becomes 28 bytes. It is also appropriate to use other hash calculation functions such as MD4 and MD5.

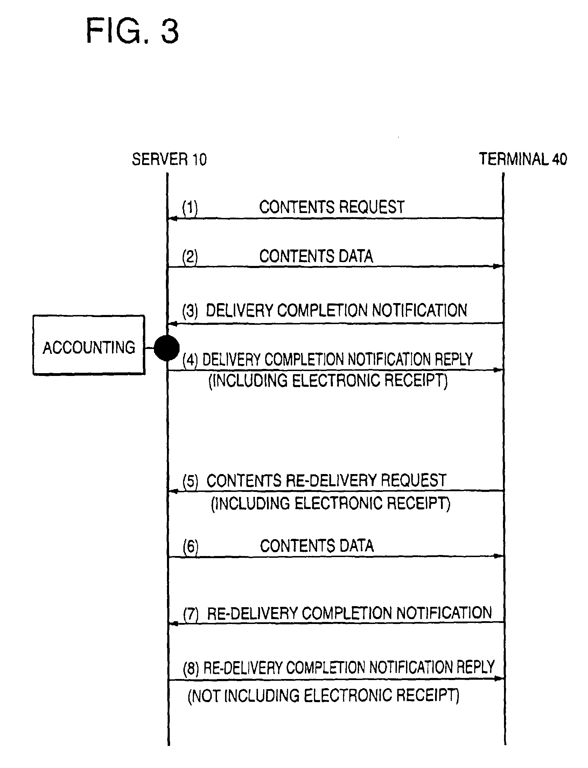

FIG. 3 shows a procedure for the contents delivery. Prior to a contents request, the terminal 40 has access through the network 30 to the server 10 to make a request for contents list information. At this time, in the server 10, the user managing section 11 performs the authentication on the basis of the identification number of the terminal 40 which has gained access thereto, or the user identifier, and if the authentication result shows OK, the delivery processing section 18 sends out list information on the contents on release, generated in the contents list presenting section 15, through the communication processing section 20A to the terminal which has made the request. This list information includes contents names, contents identifiers, selling prices, allowable re-deliveries, terms of validity on re-delivery.

In the terminal 40, the contents list displaying section 41 displays this contents list information, and when a user selects the contents therefrom, the delivery requesting section 42 outputs a contents request including contents identifier information, with this contents request being communicated to the server 10 (1).

In the server 10, upon receipt of the contents request, the delivery processing section 18 reads out contents data on the relevant contents under the management by the contents accumulation managing section 16, and transmits it through the communication processing section 20A to the terminal 40 (2). The terminal 40 puts the received contents data in the contents storing section 44, and sends a delivery completion notification to the server 10 (3).

In the server 10, upon receipt of the delivery completion notification, the accounting section 12 conducts the accounting, and collects necessary information from the other sections to make out an electronic receipt (FIG. 2) in which set is the re-delivery permission flag 103 representative of the permission of the re-delivery. At this time, it generates a falsification check authentication code 112 on the basis of the electronic receipt data to attach it onto the electronic receipt. The communication processing section 20A transmits a delivery completion notification reply, including this electronic receipt, to the terminal 40 (4). Moreover, the electronic receipt falsification check authentication code 112 is sent to purchase history managing section 13, which is for managing the history on the purchases, to be stored and managed therein.

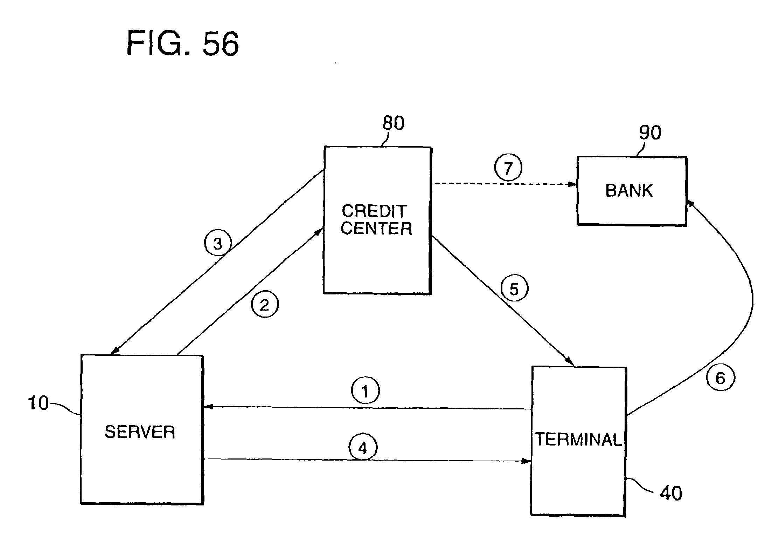

The electronic receipt 71, arriving at the terminal 40, is stored in the electronic receipt storing section 47, and as needed, is copied into backup recording media 70. A brief description will be given here of the accounting. FIG. 56 is a block diagram showing an accounting operation in the case of a credit settlement. The server 10 and the terminal 40 are communicable through their communication processing sections 20A and 48 to a credit center 80. A bank 90 accepts deposit from a user having the terminal 40, and conducts the transfer to meet a transfer request from the credit center 80. The contents of the operations designated at circled numerals _ to _ in FIG. 56 are as follows.
_ Accounting Request: The terminal sends an accounting request including a credit number, a password and a purchase price to the server.
_ Credit Inquiry : The server transmits the credit number, the password and the purchase price to the credit center (the credit inquiry signifies the inquiry about whether credible or incredible).
_ Credit Reply : The credit center makes a reply about the password check/solvency decision result (OK/NG) to the server (the credit reply signifies a reply about whether credible or incredible).
_ Accounting reply : The server transmits the result of the credit reply to the terminal.
_ Bill Issuing : If the credit shows OK in the aforesaid 3, the credit center issues/forwards a bill to the terminal (user).
_ Deposit: The user of the terminal has deposit in his/her own bank account.
_ Account Transfer request: The credit center makes a request for account transfer to the bank.

When a need for the re-delivery of the contents arises, the user displays the electronic receipt, stored in the electronic receipt storing section 47, on the electronic receipt displaying section 45 (display of the terminal 40), and after confirming the term of validity on the re-delivery and the limited number of times of the re-delivery, selects the contents to be re-delivered. The electronic receipt selecting section 46 sends the electronic receipt on the selected contents to the delivery requesting section 42, and the delivery requesting section 42 outputs a contents re-delivery request including the electronic receipt, with this contents re-delivery request being fed to the server 10 (5).

In the server 10, upon receipt of the contents re-delivery request, the communication processing section 20A sends the electronic receipt included therein to the electronic receipt verifying section 14. The electronic receipt verifying section 14 collates the falsification check authentication code 112 appendant to the electronic receipt with the falsification check authentication code being managed in the purchase history managing section 13. If the agreement therebetween takes place, it generates a falsification check authentication code on the basis of the data contents on the sent electronic receipt, and confirms whether or not the generated falsification check authentication code agrees with the appendant falsification check authentication code 112 for verifying the occurrence/non-occurrence of the falsification of the electronic receipt.

On the verification of the validity of the electronic receipt, the delivery processing section 18 confirms, on the basis of the term of validity or re-deliveries described in the electronic receipt, whether or not the re-delivery request satisfies the re-delivery condition. If satisfying the re-delivery condition, it reads out the contents data on the contents described in the electronic receipt, from the contents accumulation managing section 16 or the released contents preserving section 17 and transmits it through the communication processing section 20A to the terminal 40 (6).

The terminal 40 receives the contents data and stores it in the contents storing section 44, and the contents storing section 44 transmits a re-delivery completion notification to the server 10 (7).

In the server 10, the delivery processing section 18 sends a re-delivery completion notification reply through the communication processing section 20A to the terminal 40 (8). At this time, the delivery processing section 18 makes the purchase history managing section 13 record the re-delivery number 1 as the purchase history. This record on the number of times of re-delivery is incremented whenever the re-delivery takes place, and at the occurrence of the next re-delivery request, is referred to in making a decision on whether the number of times of re-delivery satisfies the re-delivery condition.

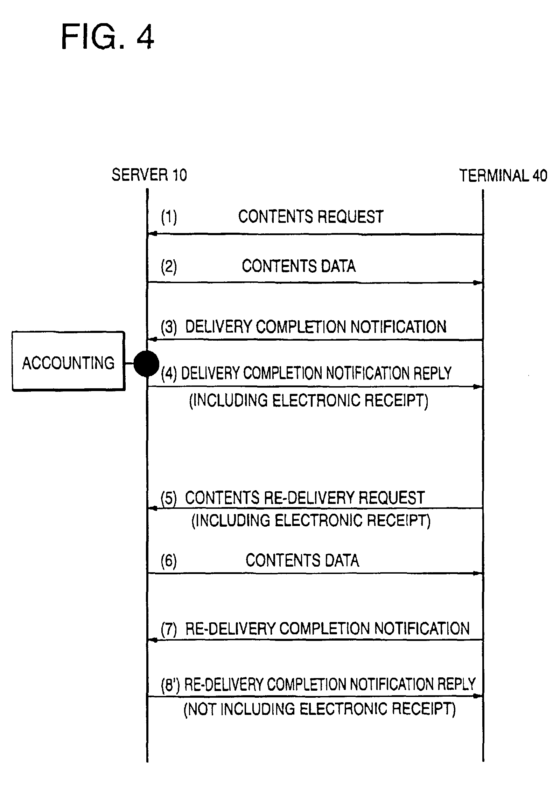

In addition, it is also appropriate that, as FIG. 4 shows, at the transmission of a re-delivery completion notification reply from the server 10 to the terminal 40 (8'), the number 111 of times of re-delivery is subtracted by one and the electronic receipt is again issued to be transmitted to the terminal 40 in a state included in the re-delivery completion notification reply. In this case, the electronic receipt re-issued is put in the electronic receipt storing section 47 of the terminal 40, while the old electronic receipt is invalidated. The invalidation of the electronic receipt is achievable by any one of the methods, such as 1) deleting all the electronic receipt data in FIG. 2, 2) overwriting all the electronic receipt data in FIG. 2, 3) placing the re-delivery permission flag 103 in the electronic receipt into a non-permitted state, 4) placing another flag indicative of invalidity/validity and setting it in the invalidity state, and others. The method shown in FIG. 4 enables a decision on the satisfaction/non-satisfaction of the re-delivery condition related to the number of times of re-delivery to be made on the basis of only the information on the electronic receipt at the next re-delivery request.

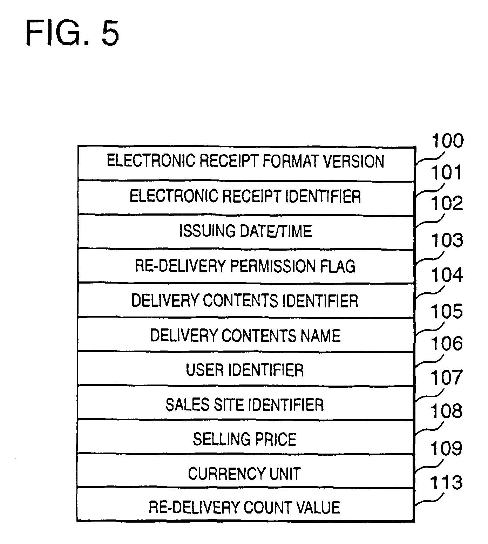

Still additionally, if a count value 113 representative of the number of times of re-delivery is set in the electronic receipt as shown in FIG. 5, the decision on satisfaction/non-satisfaction of the re-delivery condition related to the number of times of re-delivery can be made on the basis of only the electronic receipt information.

As described above, in the contents delivery method according to the embodiment, the server 10 issues an electronic receipt, which enables the re-delivery of contents to be conducted effectively. The user can easily recognize the right of the re-delivery without inquiring at the server 10 by displaying the electronic receipt, retained in the terminal 40 or the backup recording medium 70, on the electronic receipt displaying section 45.

Incidentally, in the above description, although the server 10 side manages the electronic receipt falsification check authentication code 112, in a case in which the falsification check authentication code 112 is encrypted with a private key of the server 10, it is possible to verify the validity of the electronic receipt in a manner that the falsification check authentication code 112 of the electronic receipt coming from the terminal side is decrypted with the private key of the server 10 or the public key to check whether or not the data obtained by the decryption agrees with a calculation value obtained by making a hash calculation on the electronic receipt data contents. Accordingly, this eliminates the need for the storage of the falsification check authentication code 112 on the server 10 side.

Moreover, it is also acceptable that the purchase history managing section 13 of the server 10 retains and manages the electronic receipt itself.

In this case, the verification on the validity of the electronic receipt in the terminal 40 becomes possible by collating the electronic receipt coming from the terminal with the electronic receipt the server 10 retains and manages, at the occurrence of a contents re-delivery request.

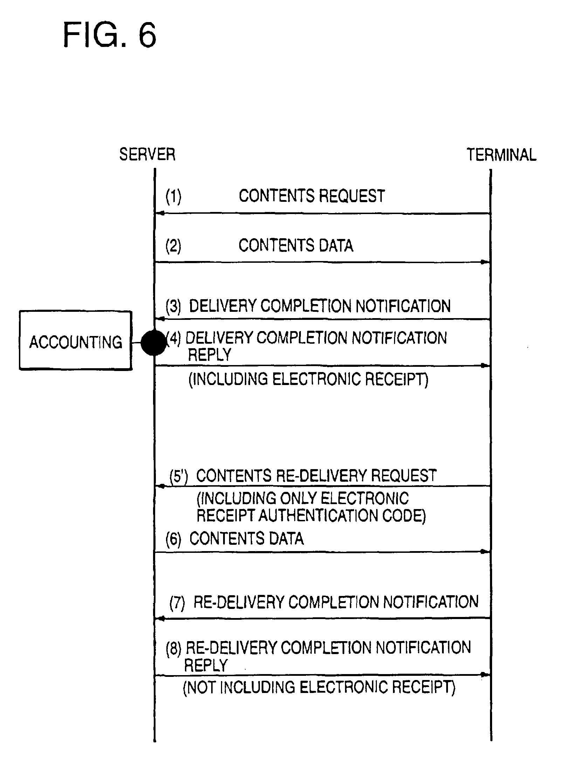

Still moreover, in this case, it is also appropriate that, as FIG. 6 shows, when the terminal 40 sends a contents re-delivery request (5'), only an electronic receipt falsification check authentication code 112 is transmitted to the server 10 and the server 10 retrieves the electronic receipt with this falsification check authentication code 112, of the electronic receipts under the management by the purchase history managing section 13 to transmit the re-delivery contents data on the basis of the description on this electronic receipt.

And still, although in the above description the number of times of re-delivery and the term of validity are used as the re-delivery conditions, it is also acceptable to use one of them.

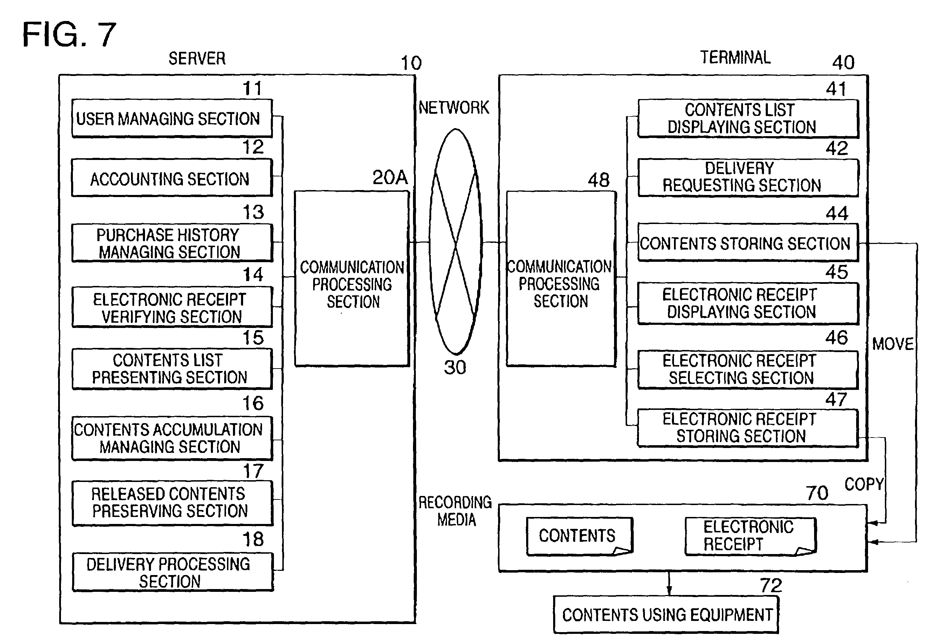

In addition, as FIG. 7 shows, the terminal 40 can have a contents using equipment 72 externally. In this case, the contents are moved from the contents storing section 44 onto recording media 70 having the copied electronic receipt, and for the use of the contents, this recording media 70 is mounted in the contents using equipment 72. Incidentally, the movement of the contents causes the contents to be removed from the contents storing section 44 so that the contents disappear therefrom.

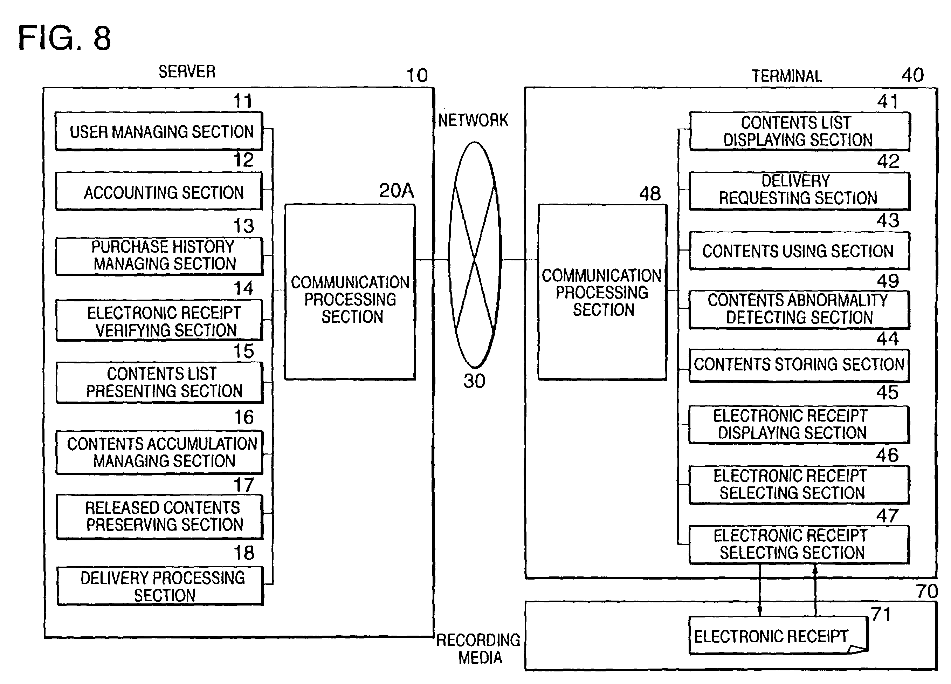

Still additionally, in a system shown in FIG. 8, the terminal 40 includes a contents abnormality detecting section 49 for detecting data errors of the contents at the use of the contents (at the regeneration). As the data error detecting method, it is possible to properly employ a method using a hash value, which will be mentioned later, a method using a parity check, or other methods. When the contents abnormality detecting section 49 detects an abnormality, the electronic receipt selecting section 46 retrieves the electronic receipt on the contents to be used from the electronic receipt storing section 47 to send it to the delivery requesting section 42, and the delivery requesting section 42 outputs, to the server 10, a contents re-delivery request including an electronic receipt. Thus, in this system, in the case of defying the use of the contents, a contents re-delivery request, together with an electronic receipt, is automatically sent to the server 10 for the re-delivery of the contents.

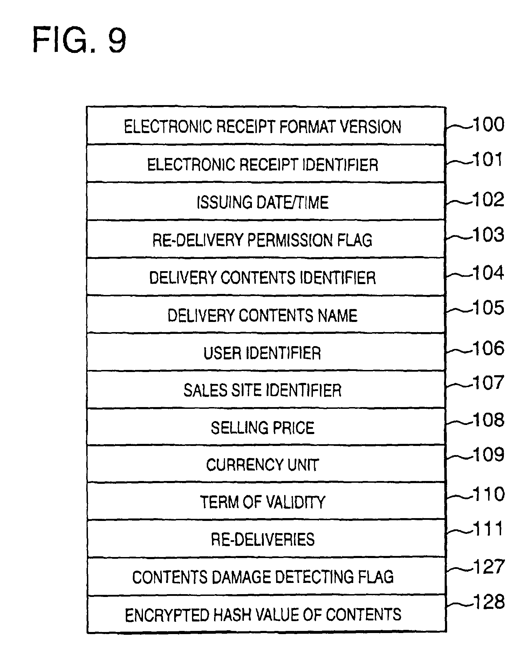

Moreover, it is also possible that, if damage occurs on contents, the contents damage is indicated on the electronic receipt and the re-delivery of the contents is allowed on the condition that the damage has occurred on contents. In this case, a design is made such that the contents are regenerable only when being combined with an electronic receipt (for example, the contents cannot be regenerated if the electronic receipt does not exist in a predetermined directory of the electronic receipt storing section 47). Still moreover, as FIG. 9 shows, in the electronic receipt, a contents damage detecting flag 127 is provided to indicate the damage of the contents and a hash value 128 of the contents is described on the electronic receipt. The CPU of the terminal 40 calculates a hash value of the contents as occasion calls to compare that value with the hash value 128 of the electronic receipt. In the case of no agreement therewith (that is, when the contents are in a damaged state), the contents damage detecting flag 127 is set. The server side permits the re-delivery of the contents only when the contents damage detecting flag 127 of the electronic receipt is in the set condition.

This can reject an illegal request of making a request for the re-delivery when the contents are in the normal condition.

### (Second Embodiment)

As a second embodiment, a description will be given hereinbelow of a method of confirming the fact that an electronic receipt sent from the server 10 arrives at the terminal 40. The system configuration and the electronic receipt structure are the same as those in the first embodiment.

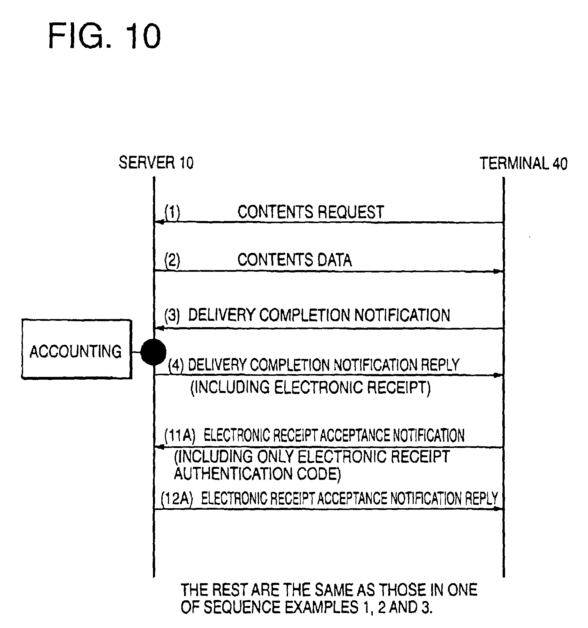

FIG. 10 shows a contents delivery procedure according to the second embodiment. The procedure from (1) to (4) are the same as those in the first embodiment.

Upon receipt of a delivery completion notification reply including an electronic receipt from the server 10, the terminal 40 sends, to the server 10, an electronic receipt acceptance notification including an electronic receipt falsification check authentication code 112 (11A).

The server 10 collates the received falsification check authentication code with the falsification check authentication code 112 it retains, and if they agree with each other, confirms the fact that the electronic receipt has correctly reached the terminal. When this confirmation comes to an end, the server 10 transmits an electronic receipt acceptance notification reply to the terminal 40 (12A). The contents re-delivery request procedure is the same as that in the first embodiment.

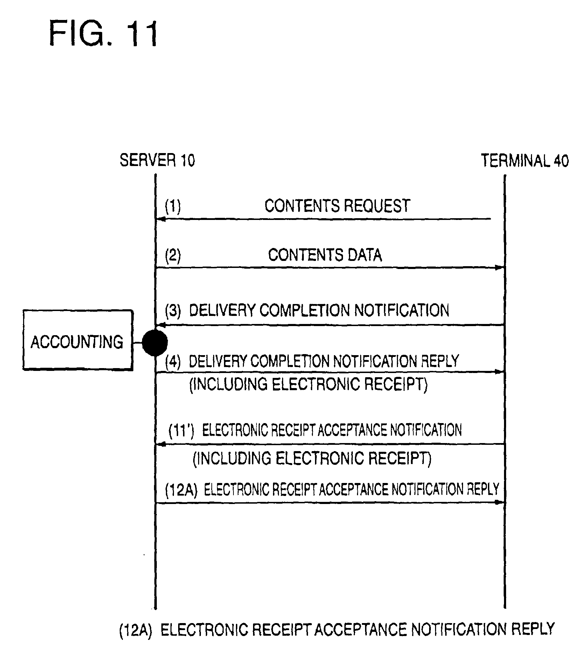

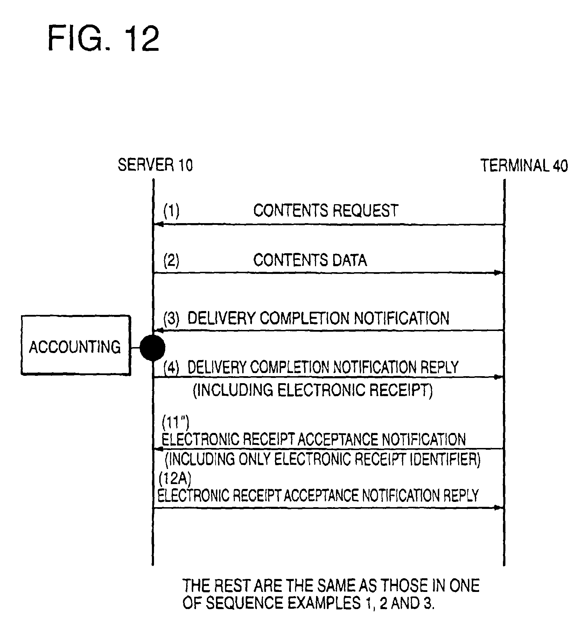

In a case in which the server 10 preserves and manages the electronic receipt, it is also appropriate that, as FIG. 11 shows, the terminal 40 sends an electronic receipt acceptance notification including an electronic receipt to the server 10(11') and the server 10 side collates it with the electronic receipt it preserves and manages. Moreover, it is also possible that, as FIG. 12 shows, an identifier 101 of an electronic receipt is sent in a state included in an electronic receipt acceptance notification (11") so that the server 10 side confirms the correct arrival of the electronic receipt at the terminal 40.

Thus, owing to the confirmation of the proper arrival of the electronic receipt, transmitted from the server 10, at the terminal 40, it is possible to implement the contents delivery method according to the present invention without any trouble.

### (Third Embodiment)

As a third embodiment, a description will be given hereinbelow of a case in which a re-delivery price is set so that the accounting of the set price is rendered at re-delivery.

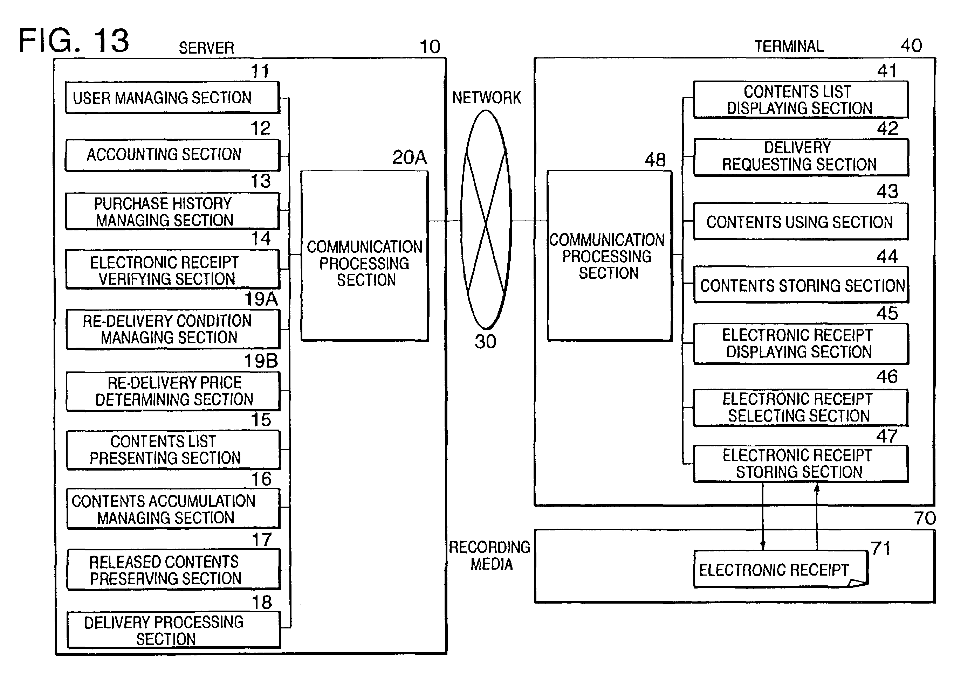

In this system, as FIG. 13 shows, the server 10 is made up of a re-delivery condition managing section 19A for managing the condition on the re-delivery price and setting it on an electronic receipt issued and a re-delivery price determining section 19B for determining a re-delivery price on the basis of the re-delivery price condition. The other configuration of the server 10 and the configuration of the terminal 40 are the same as those in the first embodiment (FIG. 1). A re-delivery price condition managed in the re-delivery condition managing section 19A is described on an electronic receipt issued by the server 10.

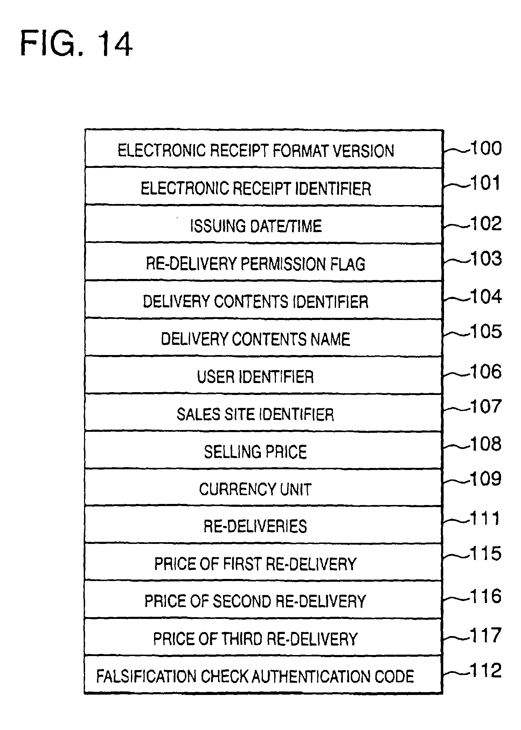

FIG. 14 is an illustration of an example of an electronic receipt on which a price (free of charge) 115 of the first re-delivery, a price (half price) 116 of the second re-delivery and a price (80%) 117 of the third re-delivery are described as the re-delivery price condition.

Upon a transmission of a re-delivery request from the terminal 40, the re-delivery price determining section 19B of the server 10 makes an identification on the number of times of re-delivery and reads a re-delivery price corresponding to the number of times of re-delivery from the electronic receipt to hand it over to the accounting section 12. The accounting section 12 renders the corresponding accounting.

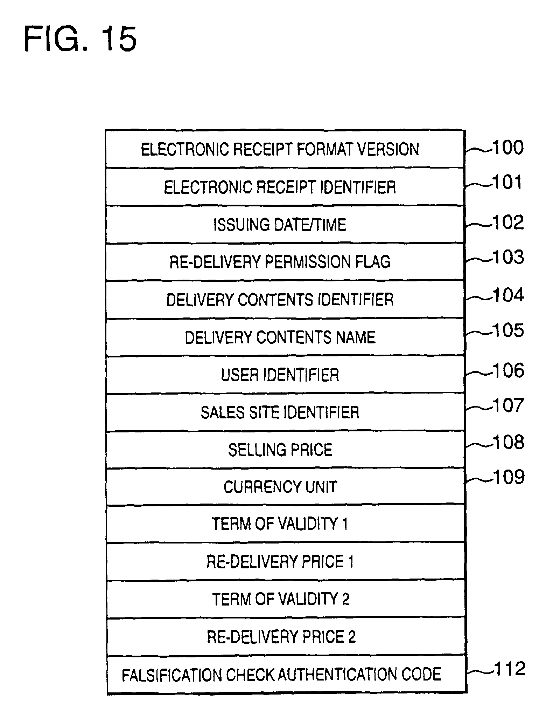

FIG. 15 is an illustration of an electronic receipt in a case in which the re-delivery condition managing section 19A sets a re-delivery price in a state combined with a term of validity. A re-delivery price 1 (free of charge) is set in the case of a validity term 1 (within three months from the issuing data/time 102), and a re-delivery price 2 (half price) is set for a validity term 2 (three mounts to six months). When a re-delivery request is transmitted from the terminal 40, the re-delivery price determining section 19B communicates the re-delivery price 1 or the re-delivery price 2 to the accounting section 12 according to the number of days after the issuing date 102 described on the electronic receipt.

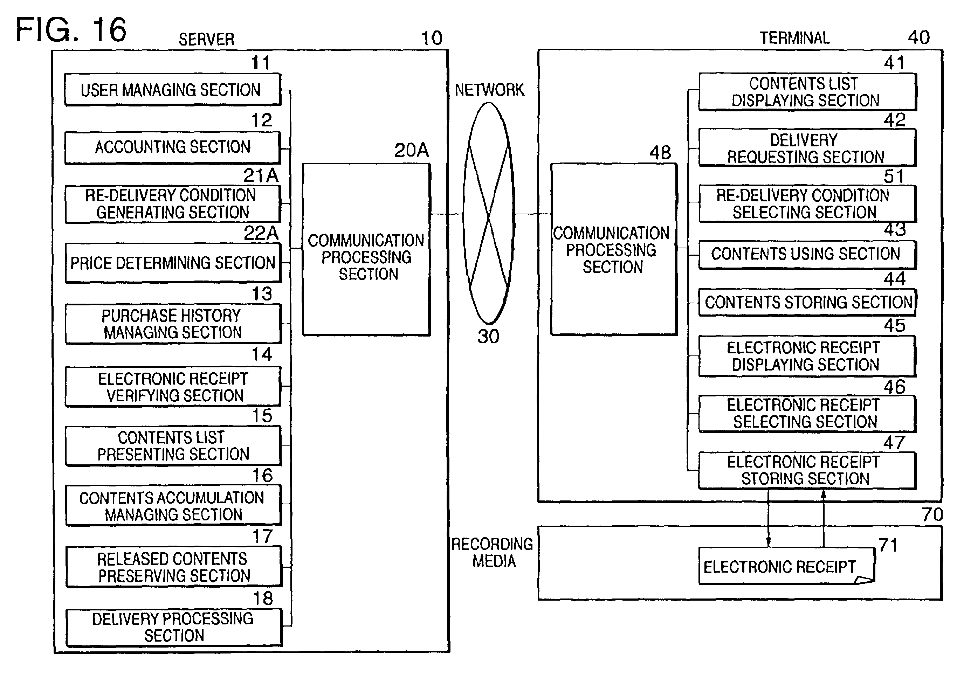

In a system shown in FIG. 16, the server 10 includes a re-delivery condition generating section 21A for setting a parameter for a re-delivery price calculation equation (or expression) with respect to an electronic receipt to be issued and a price determining section 22A for determining a re-delivery price through the use of this parameter, while the terminal 40 includes a re-delivery condition selecting section 51 for selecting a re-delivery condition.

In this system, a contents price at the initial purchase is determined according to a re-delivery condition (the number of times of re-delivery, term of validity, or the like) of an electronic receipt, and in the case of a large number of times of re-delivery and a long term of validity, the contents price at the initial purchase is set at a high value, whereas in a case in which the limited number of times of re-delivery and the term of validity are set at zero, the contents price is set at a low value. A user selects one of them through the re-delivery condition selecting section 51 at the purchase of the contents.

The re-delivery condition generating section 21A of the server 10 describes a re-delivery price equation identifier 122, a re-delivery price parameter 1 (123), a re-delivery price parameter 2 (124) and a re-delivery price parameter 3 (125).

When a re-delivery request arrives from the terminal 40, the price determining section 22A specifies a re-delivery equation on the basis of the re-delivery equation identifier 122 described on the electronic receipt and substitutes the re-delivery price parameter 1 (123), the re-delivery price parameter 2 (124) and the re-delivery price parameter 3 (125) into the re-delivery price equation for determining a re-delivery price, and further communicates it to the accounting section 12.

Thus, this system can determine the re-delivery price or initial price of the contents in diverse manners.

### (Fourth Embodiment)

As a fourth embodiment, a description will be given hereinbelow of a case in which a request for refund of a contents purchase sum is made through the use of an electronic receipt.

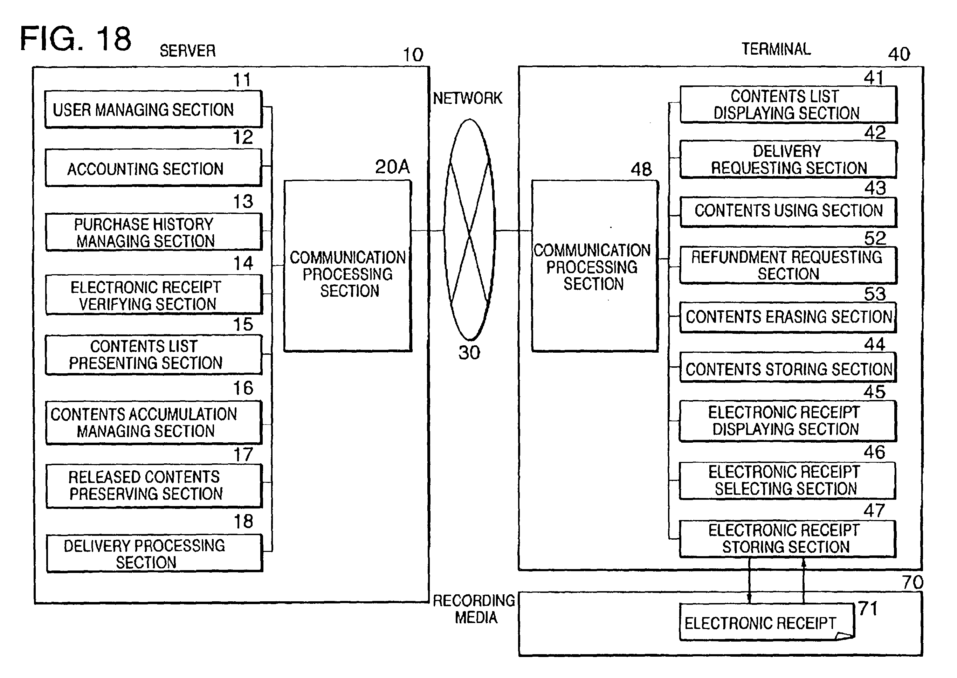

As FIG. 18 shows, in this system, the terminal 40 includes a refundment requesting section 52 for making a request for refund and a contents erasing section 53 for erasing the contents connected with the refund.

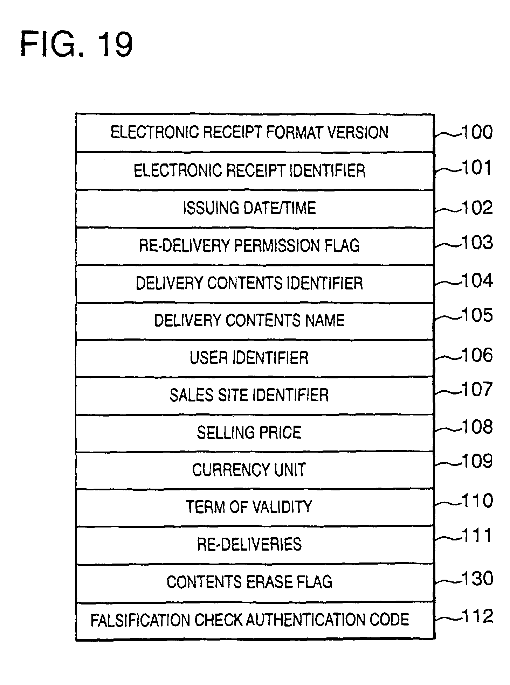

In addition, a description to the effect of the erase of the contents is made on an electronic receipt, and in this case, a contents erase flag 130 indicative of the fact of the contents being erased is put thereon as shown in FIG. 19.

When the contents delivered are different from intended, the user performs an terminal operation for the refund. The refundment requesting section 52 reads out the electronic receipt on the contents from the electronic receipt storing section 47 and gives an instruction to the contents erasing section 53 for erasing the contents. When the contents are erased, the refundment requesting section 52 sets the contents erase flag 130 of the electronic receipt and transmits a refund request, together with this electronic receipt, to the server 10.

In response to this, the server 10 makes a request to the accounting center for refund processing.

This achieves efficient refund of the contents purchase sum through the use of an electronic receipt.

### (Fifth Embodiment)

As a fifth embodiment, a description will be given hereinbelow of a method of conducting contents purchase processing efficiently through the use of an electronic receipt. The system configuration is the same as that of the first embodiment (FIG. 1).

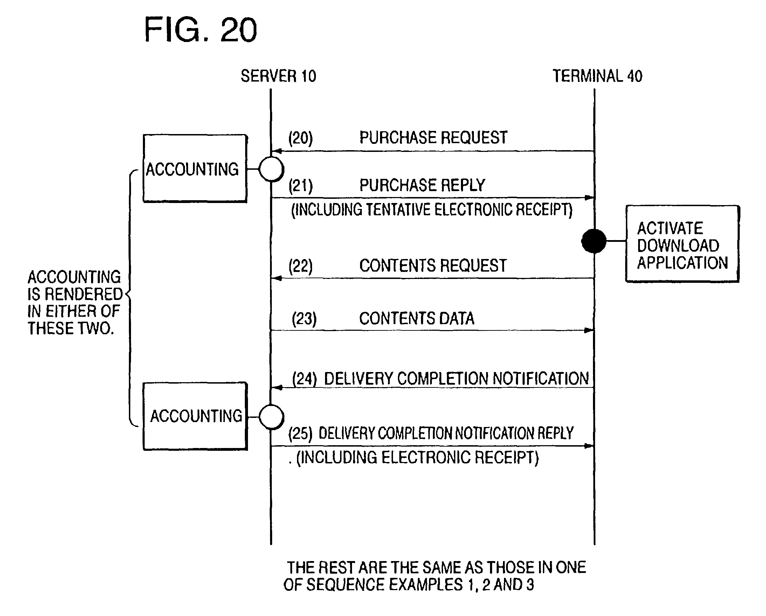

FIG. 20 is an illustration of a procedure therefor.

When a user selects some contents from a contents list displayed on the contents list displaying section 41 of the terminal 40, a purchase request is transmitted from the delivery requesting section 42 of the terminal 40 to the server 10 (20).

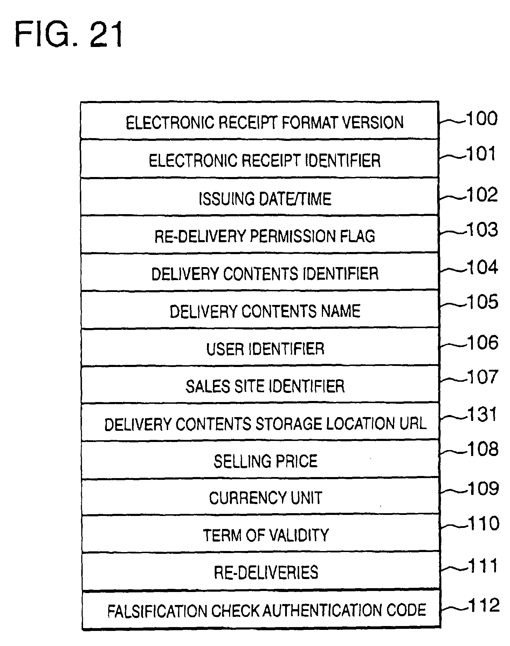

In response to the purchase request, the server 10 conducts accounting to return a purchase reply to the terminal 40 (21). This purchase reply includes a tentative electronic receipt. The tentative electronic receipt includes a delivery contents storage location 131 in addition to the same information contents as those of an electronic receipt (FIG. 2), as shown in FIG. 21.

Upon receipt of the tentative electronic receipt, the delivery requesting section 42 of the terminal 40 activates an application for receiving the delivery of the contents, in this case, an application for downloading the contents. The download application transmits a contents request to the server 10 (22), and receives the delivery of the contents data (23).

Upon the completion of the contents delivery, the terminal 40 sends a delivery completion notification to the server 10 (24), and receives a delivery completion notification reply including an electronic receipt (25).

The procedure from the re-delivery request on is the same as that of the first embodiment.

Thus, by receiving the tentative electronic receipt, the terminal 40 can switch the processing in the terminal 40 from the contents list display to the contents download (for example, browser → plug-in of application for download of contents →download processing).

In addition, since the delivery contents storage location (URL) 131 is included in the information contents of the tentative electronic receipt, at the contents request, the terminal 40 can gain direct access to the contents to be delivered by designating the URL 131. In this case, quick access becomes feasible because there is no need to make the retrieval using a contents identifier in the server 10.

Still additionally, since the delivery contents storage location (URL) 131 is included in the tentative electronic receipt, when making a request for the re-delivery of the contents, the terminal 40 can designate this URL 131 'to gain the direct access to the contents to be re-delivered.

Incidentally, in FIG. 20, it is also possible that the accounting is rendered at the reception of the delivery completion notification (24).

Moreover, the delivery contents storage location (URL) 131 can also be included in the electronic receipts in the first to fourth embodiments. This enables the direct access from the terminal to the contents to be re-delivered.

### (Sixth Embodiment)

As a sixth embodiment, a description will be given hereinbelow of a method capable of re-delivery even if contents deliver is a failure.

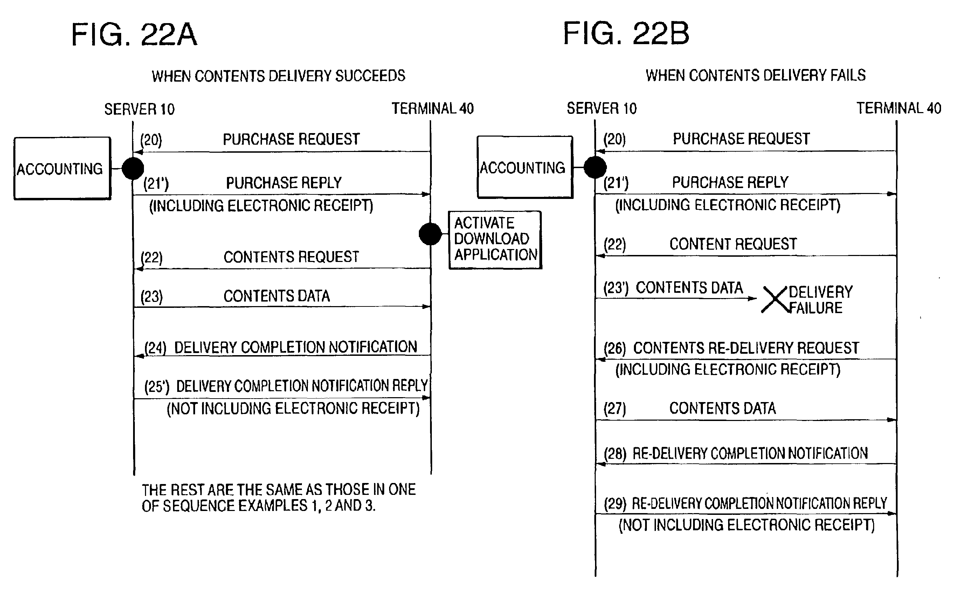

In this method, an electronic receipt is issued in place of the tentative electronic receipt in the fifth embodiment as shown in FIGs. 22A and 22B.

FIG. 22A is an illustration of a procedure to be taken for when the contents delivery succeeds.

When a user selects some contents from a contents list displayed on the contents list displaying section 41 of the terminal 40, the delivery requesting section 42 of the terminal 40 transmits a purchase request to the server 10 (20).

In response to the purchase request, the server 10 conducts accounting and returns a purchase reply including an electronic receipt (21'). Upon receipt of the electronic receipt, the delivery requesting section 42 of the terminal 40 activates an application for downloading the contents. This download application transmits a contents request to the server 10 (22) and receives the delivery of the contents data (23).

Upon the completion of the contents delivery, the terminal 40 sends a delivery completion notification to the server 10 (24), and receives a delivery completion notification reply including no electronic receipt (25').

FIG. 22B is an illustration of a procedure to be taken for when a content delivery is a failure. The procedure up to the contents request (22) is the same as that in FIG. 22A. Let it be assumed that the delivery of the contents data from the server 10 was a failure (23'). The terminal 40 transmits a contents re-delivery request including an electronic receipt to the server 10 (26), while the server 10 transmits the contents data (27). The terminal 40 sends a re-delivery completion notification to the server 10 (28), while the server 10 sends a re-delivery completion notification reply (not including an electronic receipt) to the terminal 40. Incidentally, the aforesaid failure of the data delivery is recognizable by detecting a disconnection of a line in the middle of the communication, packet dropout, no reception of a predetermined data volume, or the like.

As described above, in the procedure according to this embodiment, since an electronic receipt is sent to the terminal at the stage of the purchase reply (21'), even if the contents deliver has failed halfway, it is possible to make a request for re-delivery through the use of the electronic receipt.

### (Seventh Embodiment)

As a seventh embodiment, a description will be given hereinbelow of a method of efficiently conducting delivery processing and accounting (or credit processing) through the use of a tentative electronic receipt.

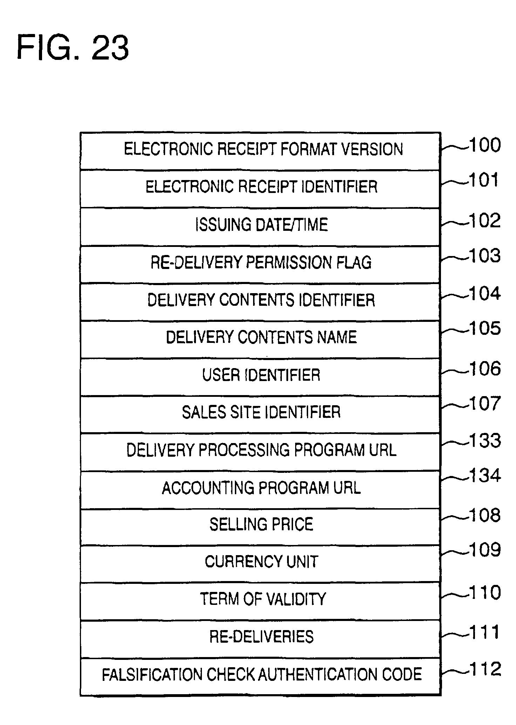

As FIG. 23 shows, this tentative electronic receipt includes a delivery processing program URL 133 and an accounting program (or credit processing program) URL 134.

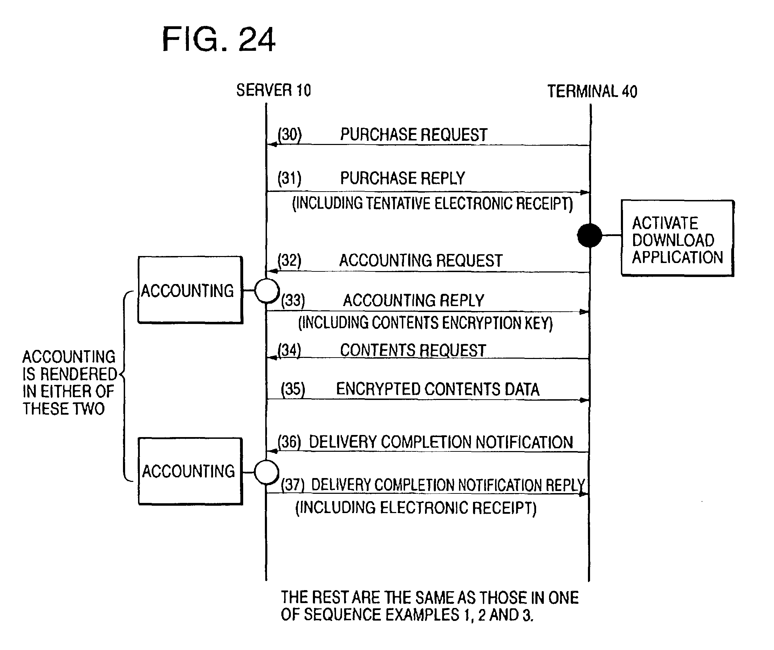

FIG. 24 is an illustration of a procedure according to this embodiment.

The terminal 40 sends out a purchase request to the server 10 (30), while the server 10 sends a purchase reply including a tentative electronic receipt shown in FIG. 23 to the terminal 40 (31). Upon receipt of the tentative electronic receipt, the terminal 40 activates an application for downloading contents. This download application makes an accounting request with respect to the accounting program URL (32). The terminal 40 receives an accounting reply including an encryption key for the contents from the server 10 (33). The download application sends a contents request with respect the delivery processing program URL (34), and the server 10 transmits the encrypted contents data to the terminal 40 (35).

Upon the completion of the contents deliver, the download application sends a delivery completion notification to the server 10 (36), and receives a delivery completion notification reply including an electronic receipt therefrom (37). Incidentally, the server 10 can conduct the actual accounting either at the reception of the accounting request (32) or the reception of the delivery completion notification (365).

Thus, with the procedure according to this embodiment, the accounting program URL and delivery processing program URL of the server 10 are designated to make the accounting request and the contents request directly, thereby enhancing the efficiency of the processing.

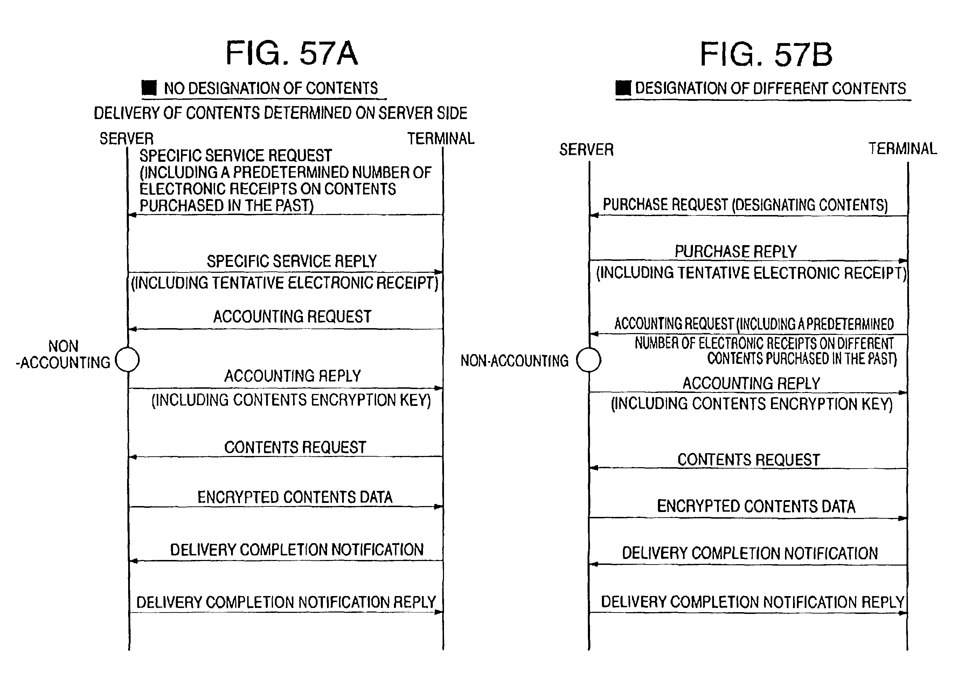

Although, in the descriptions of the first to sixth embodiment, the server 10 conducts the accounting in response to a delivery request from the terminal 40, according to the seventh embodiment, it is also possible to excuse the accounting in accordance with the user side past contents purchase situation or to present certain services. FIGs. 57A and 57B are sequence charts showing two concrete service examples of the seventh embodiment in which accounting on a delivery request for contents A (including arbitrary and non-specified contents) is conducted through the use of an electronic receipt on contents different from the contents A to be sent from the terminal.
(1) One example is to provide a service in which accounting (in the case of no-charge delivery service, including "non-accounting") to an arbitrary contents delivery request is conducted using some electronic receipt sent by the terminal without designating contents particularly, for example, a service (specific service reply) in which a no-charge delivery of contents different from the already purchased contents, their associated contents, new contents and others is made for high-priced contents purchasers/many-contents purchasers. Concretely, for example, in the case of electronic music data purchase, an electronic receipt corresponding to more than 100 tunes is sent to a person who purchased more than 100 tunes, and five latest hit tunes are presented thereto without accounting on the condition of the reception of the electronic receipt. Moreover, it is also possible to offer a service at a low price. FIG. 57A shows an example in which, when a request for the latest hit tunes is made as a specific service request from the terminal 40, the request, together with a predetermined number of electronic receipts on the past purchase, is transmitted to the server 10 and the server 10 returns a specific service reply including a tentative electronic receipt to the terminal 10, and no accounting is made with respect to the subsequent accounting requests.
(2) The other example is a service in which, at new purchase of contents B (re-purchase made because of no satisfaction of the re-delivery service condition), the accounting of the contents B is entirely excused on the basis of the information on a electronic receipt different from the contents B to be sent from the terminal 40. In the example shown in FIG. 57B, when the terminal 40 transmits an accounting request to the server 10, the request, together with a predetermined number of electronic receipts on the past purchase, is transmitted thereto. Incidentally, in offering such services, it is also possible to excuse only a part of the accounting. In the examples shown in FIGs. 57A and 57B, the server 10 checks the terms of validity of the predetermined number of electronic receipts received at the reception of the specific service request reception or at the reception of the accounting request and, if all are within the terms of validity, delivers the specific service requested from the terminal 40 or the contents corresponding to the purchase request without conducting the accounting.

Thus, for example, in a case in which many electronic receipts on the contents, the re-delivery of which is unnecessary because of the past purchase, are accumulated in the terminal 40, these can be exchanged with new contents, or a free-of-charge service or a low-price service can be offered to regular service using people, which provides an advantage to the user.

### (Eighth Embodiment)

As an eighth embodiment, a description will be given hereinbelow of, in a system in which a plurality of servers provide contents while sharing work with each other, a delivery method of realizing efficient delivery of contents.

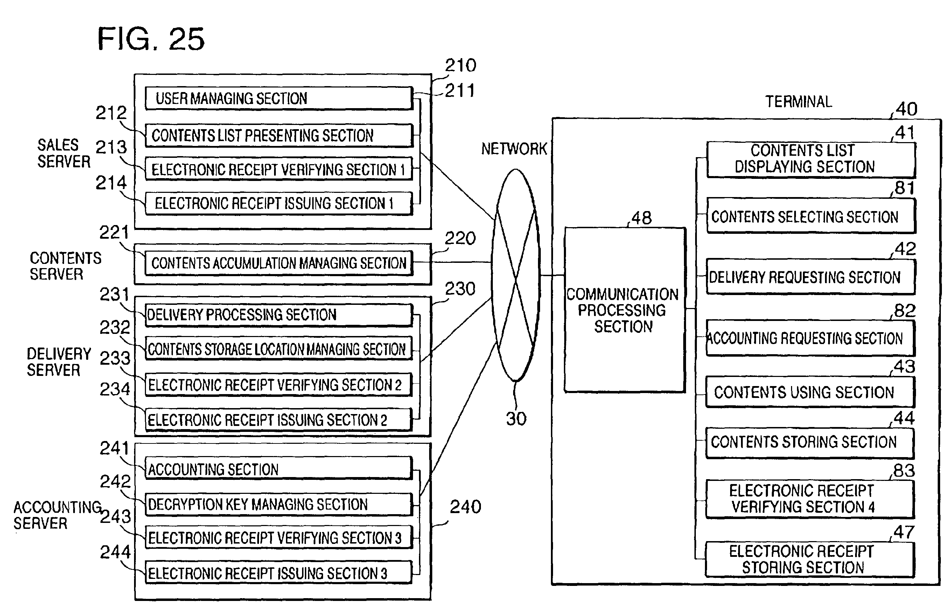

As FIG. 25 shows, in this system, a contents providing side server is made up of a sales server 210 forming a sales processing section for accepting the purchase of contents, a contents server 220 for storing contents, a delivery server 230 for acquiring purchased contents from the contents server 220 to deliver it, and an accounting server 240 for conducting accounting.

The sales server 210 includes a user managing section 211 for managing user information, a contents list presenting section 212 for presenting contents on sale in a portal site, an electronic receipt issuing section 214 for issuing an electronic receipt, and an electronic receipt verifying section 213.

The contents server 220 includes a contents accumulation managing section 221 for accumulatively managing contents . The delivery server 230 includes a delivery processing section 231 for delivering contents, preserved in the contents server 220, to a terminal 40 which has purchased contents, a contents storage location managing section 232 for managing contents storage locations in the contents server 220, an electronic receipt verifying section 233 for verifying electronic receipts, and an electronic receipt issuing section 234 for issuing an electronic receipt.

The accounting server 240 includes an accounting section 241 for implementing accounting, a decryption key managing section 242 for managing an decryption key for encrypted contents, an electronic receipt verifying section 243 for verifying an electronic receipt, and an electronic receipt issuing section 244 for issuing an electronic receipt.

Each of the servers has a communication processing section for setting up a connection with a network 30, but it is omitted from the illustration. And still, the servers have a private key for common use.

In addition, a terminal 40 is made up of a contents list displaying section 41 having a browser feature for displaying contents presentation information, a contents selecting section 81 for making a request for the purchase of the selected contents, a delivery requesting section 42 for making a request for the delivery or re-delivery of the contents, an accounting requesting section 82 for making a request for the accounting on the purchased contents, a contents storing section 44 for storing the delivered contents, a contents using section 43 for using the delivered contents in a seeing or hearing manner, an electronic receipt verifying section 83 for verifying an electronic receipt coming from servers, an electronic receipt storing section 47 for storing an electronic receipt, and a communication processing section 48 for controlling communications with servers.

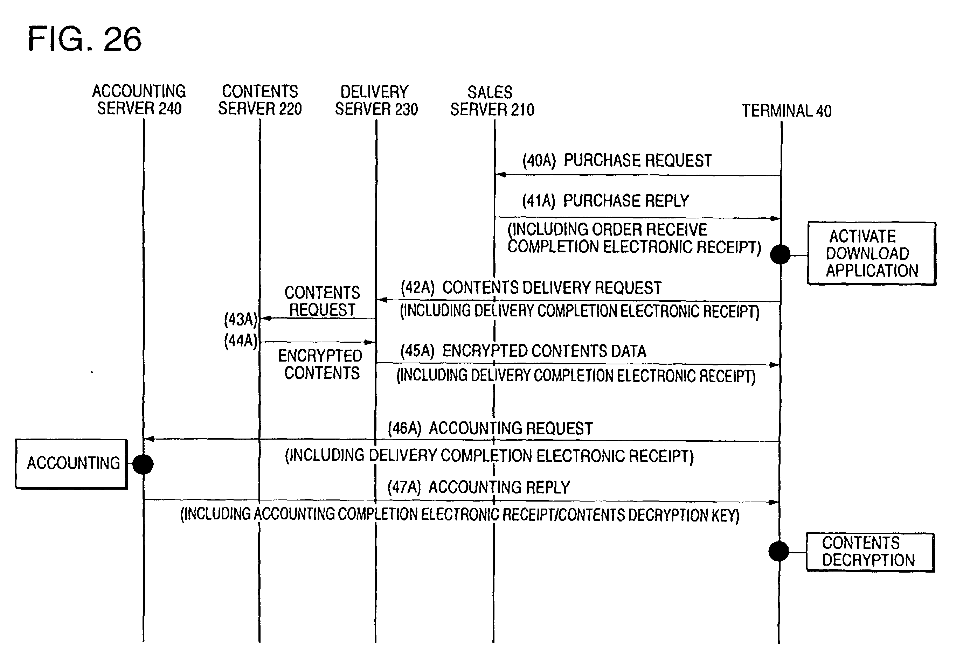

FIG. 26 is an illustration of a procedure for contents delivery. The terminal 40, prior to making a contents request, has access through the network 30 to the sales server 210 to make a request for contents list information. At this time, in the sales server 210, the user managing section 211 makes the authentication through the use of an identification number of the terminal 40 which has gained access thereto, or a user identifier, and if the authentication result shows OK, sends released contents list information, generated in the contents list presenting section 212, to the terminal 40 which has made the request. This list information includes contents names, contents identifiers, selling prices, limited re-deliveries, terms of validity of re-delivery, and others.

In the terminal 40, the contents list displaying section 41 displays this contents list information, and when the user selects contents therefrom, the contents selecting section 81 transmits a purchase request including information such as the identifier of the selected contents through the communication processing section 48 to the sales server 210 (40A). The electronic receipt issuing section 214 of the sales server 210 receiving the purchase request issues an order receive completion electronic receipt.

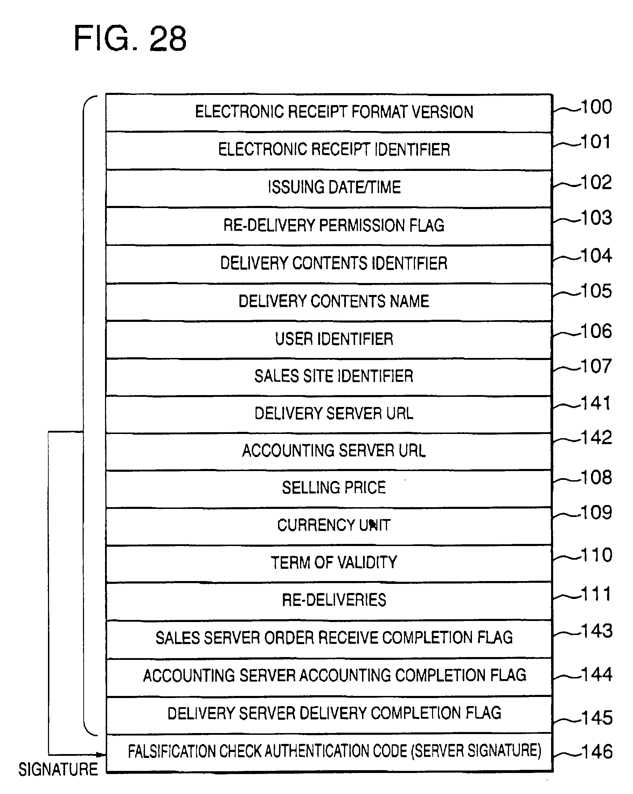

As FIG. 28 shows, as well as in FIG. 2, on this electronic receipt, there are described information including an electronic receipt format version number 100, an electronic receipt identifier 101, an issuing date/time 102, a re-delivery permission flag 103, a delivery contents identifier 104, a delivery contents name 105, a user identifier 106, a sales site identifier 107, a selling price 108, a currency unit 109, a term of validity 110 and the limited number of times of re-delivery 111, and further described a URL 141 of the delivery server 230, a URL 142 of the accounting server 240, a sales server order receive completion flag 143 to be set when the sales server 210 has received an order on contents, an accounting server accounting completion flag 144 to be set when the accounting server 240 has completed the accounting, and a delivery server delivery completion flag 145 to be set when the delivery server 230 has delivered contents. The electronic receipt issuing section 214 issues an order receive completion electronic receipt on which the sales server order receive completion flag 143 of the electronic receipt is set at "1". The delivery server delivery completion flag 145 and accounting server accounting completion flag 144 on the order receive completion electronic receipt remain at "0".

Moreover, the electronic receipt issuing section 214 makes a hash calculation using a one-way function with respect to all data on an electronic receipt for attaching a digital signature to the electronic receipt, and encrypts the calculation value through the use of a private key common to the servers to append the encrypted calculation value as a falsification check authentication code 146 to the electronic receipt. The sales server 210 transmits a purchase reply including this order receive completion electronic receipt to the terminal 40 (41).

Upon receipt of the order receive completion electronic receipt, the terminal 40 activates an application for the download of the contents, and transmits a contents delivery request, together with the order receive completion electronic receipt, to the delivery server 230 on the basis of the delivery server URL 141 described on the order receive completion electronic receipt (42).

In the delivery server 230, the electronic receipt verifying section 233 verifies the falsification check authentication code 146 of the order receive completion electronic receipt included in the received contents delivery request. This verification is made by making a validity decision as to whether or not the value obtained by decrypting the falsification check authentication code 146 of the received order receive completion electronic receipt through the use of the private key common to the servers agrees with the calculation value of the hash calculation using the one-way function with respect to the electronic receipt contents other than the authentication code (the agreement shows the validity). If the validity is confirmed, it sees a table of the correspondence between the contents identifiers retained in the contents storage location managing section 232 and the URLs of the contents to seek the contents server 220 in which the contents described in the order receive completion electronic receipt are to be stored, and transmits a transfer request on the contents to the contents server 220 (43). In response to this, the contents server 220 transfer the designated contents data (44). The contents data is encrypted in advance and stored in the contents server 220.

When the delivery server 230 receives the encrypted contents data from the contents server 220, the delivery processing section 231 delivers the encrypted contents data to the terminal 40. At this time, the electronic receipt issuing section 234 of the delivery server 230, after completing the delivery of all the delivery data, changes the delivery server delivery completion flag 145 of the order receive completion electronic receipt to "1", and makes a re-calculation for obtaining a falsification check authentication code to generate a delivery completion electronic receipt having a new falsification check authentication code 146, and then transmits it to the terminal 40 (45).

When the terminal 40 receives the encrypted contents data and the delivery completion electronic receipt, the encrypted contents data is stored in the contents storing section 44, and the accounting requesting section 82 transmits, to the accounting server 240, an accounting request with the delivery completion electronic receipt on the basis of the accounting server URL 142 described on the electronic receipt (46).

In the accounting server 240, upon receipt of the account request, the electronic receipt verifying section 243 verifies the falsification check authentication code 146 of the delivery completion electronic receipt in the above-mentioned manner. If the validity is confirmed, the accounting section 241 conducts the accounting on the condition described on the electronic receipt. Moreover, the electronic receipt issuing section 244 changes the accounting server accounting completion flag 144 to "1", and makes a re-calculation for a falsification check authentication to generate an accounting completion electronic receipt with a new falsification check authentication code 146. The accounting server 240 transmits, to the terminal 40, a contents decryption key corresponding to the contents identifier described on the electronic receipt, managed in the decryption key managing section 242, and an accounting reply having the accounting completion electronic receipt generated by the electronic receipt issuing section 244 (47).

Upon receipt of the accounting reply, the terminal 40 puts the accounting completion electronic receipt in the electronic receipt storing section 47. The reception of this accounting reply allows the already received encrypted contents data to be decrypted through a content decryption key included therein for the use thereof in the contents using section 43.

Incidentally, although the description given here relates to an example in which the flag is set at "0" in the case of non-processing and is set at "1" for processing-completion with respect to the order receive information, delivery completion information and accounting completion information described on an electronic receipt, it is also possible to employ a method in which processing completion date/time is set at the processing completion and an impossible value (for example, a minus value) is set as the date/time at the non-processing.

In addition, if the electronic receipt verifying section 83 verifies the falsification check authentication code 146 of an electronic receipt through the use of a public key common to the servers, then even the terminal side can verify that the electronic receipt has been issued by the right server.

Thus, even in a case in which a sales portal feature, delivery feature, contents data storage feature and accounting feature needed for the contents delivery are placed in a plurality of servers in a state distributed through a network, a progressive situation of the purchase processing in the terminal can be managed on the basis of the processing completion information described on the electronic receipt, and each server is not required to keep communications among the servers with respect to the contents purchase by the terminal. Accordingly, the employment of the electronic receipt enables the flexible arrangement of a group of servers.

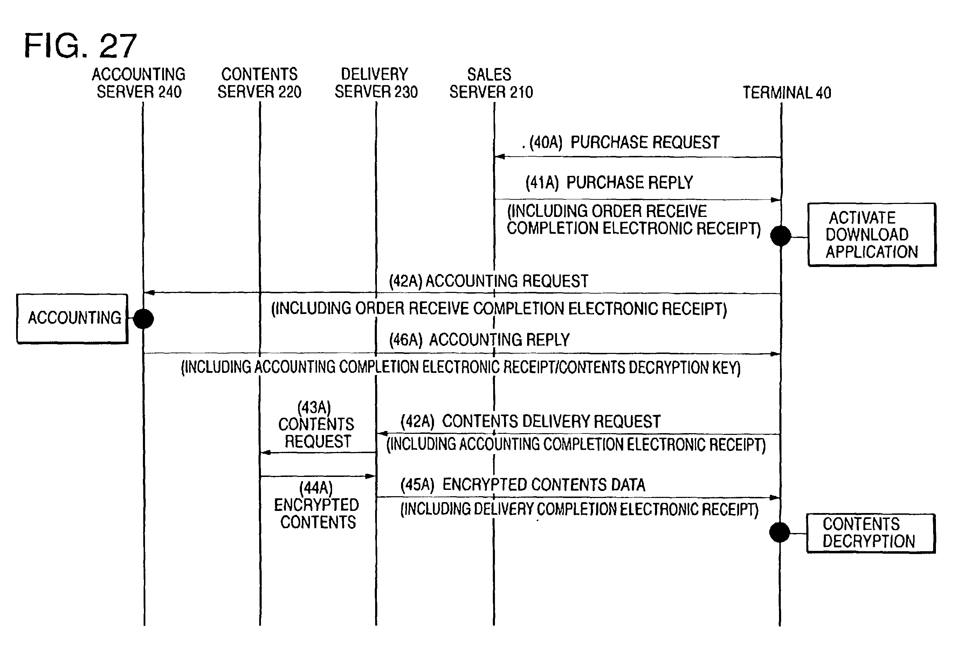

As this embodiment, a description has been given of a sequence example in which the purchase request/reply, contents delivery request/reply and accounting request/reply are conducted in this order as shown in FIG. 26, however, it is also possible to, for purchase control, employ a sequence in which the contents decryption key transmission and the accounting are conducted prior to the transmission of the encrypted contents data in the order of purchase request/reply, accounting request/reply and contents delivery request/reply, as shown in FIG. 27. In this case, lastly, a delivery completion electronic receipt is left as an electronic receipt in the terminal.

In addition, in the sequences shown in FIGs. 26 and 27, it is also appropriate to additionally employ a procedure in which the delivery server 230 and the terminal 40 receiving an electronic receipt indicative of the completion of the processing by the accounting server 240 lastly transmits that electronic receipt to the sales server 210 and the electronic receipt verifying section 213 of the sales server 210 performs the verification thereof.

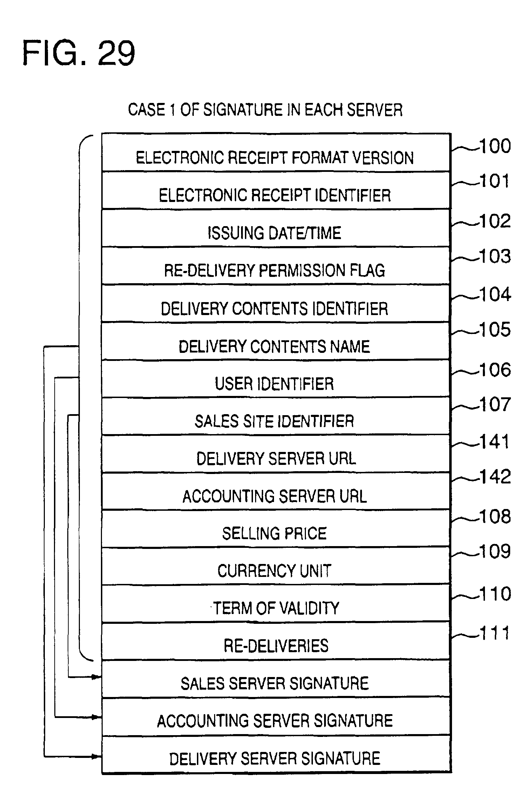

Still additionally, although, as described above with reference to FIG. 28, as the information contents of the electronic receipt, the processing completion information 143, 144 and 145 in the servers are additionally recorded and the authentication code 146 is generated using a private key common to the server group, it is also possible to employ a mode in which, as shown in FIG. 29, a private key is prepared for each server while public keys are previously opened to the public among the servers so that, at the completion of the processing in each server, the signature of each server is generated through the use of its own private key and additionally recorded. In this case, the verification of the authentication code is made by perform the decryption through the use of the public key of a different server to make a decision on the identity of the hash calculation.

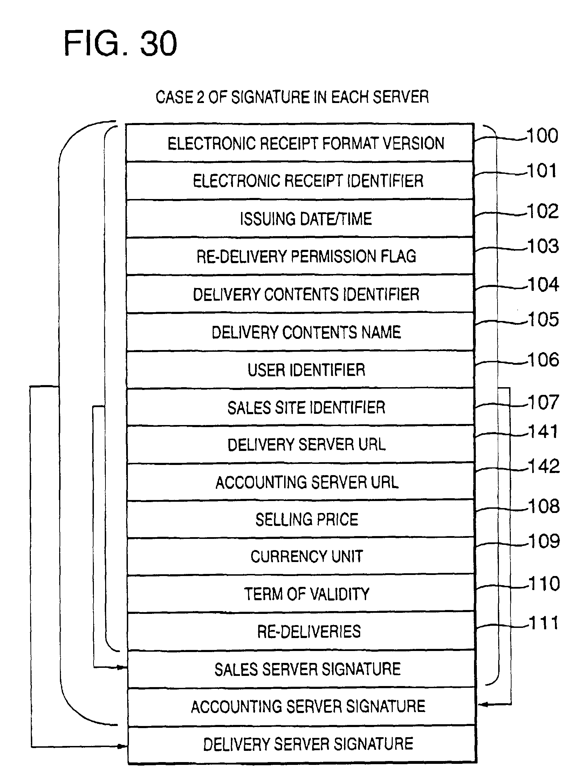

Moreover, it can also be considered that, at the recording of the signature of one server, information obtained by encrypting the hash value of the information contents other than the signature portion through the use of the private key of the one server is additionally recorded as a signature as shown in FIG. 29, and that a signature obtained by encrypting the entire hash value including a signature of a different server affixed prior to the processing of one server through the use of a private key of the one server is additionally recorded as shown in FIG. 30. In this case, the progress situation of the contents purchase processing in the terminal can be managed through the digital signature described on the electronic receipt. The signature mode of FIG. 29 does not depend upon the sequence of the purchase processing, whereas in the mode of FIG. 30, the purchase processing sequence becomes clear due to the signatures. Accordingly, the mode of FIG. 30 is effective in a case in which the purchase processing sequence is strictly prescribed.

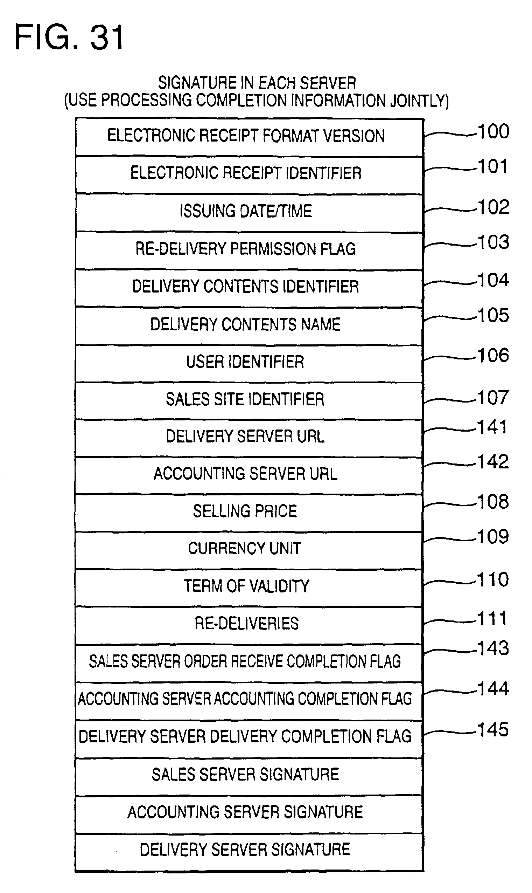

Still moreover, it is also possible to employ a mode in which the processing completion information (sales server order receive completion flag, accounting server accounting completion flag, delivery server delivery completion flag) and the server signatures (sales server signature, accounting server signature, delivery server signature) are combined with each other as shown in FIG. 31.

### (Ninth Embodiment)

As a ninth embodiment, a description will be given hereinbelow of re-delivery processing of contents delivered according to the eighth embodiment.

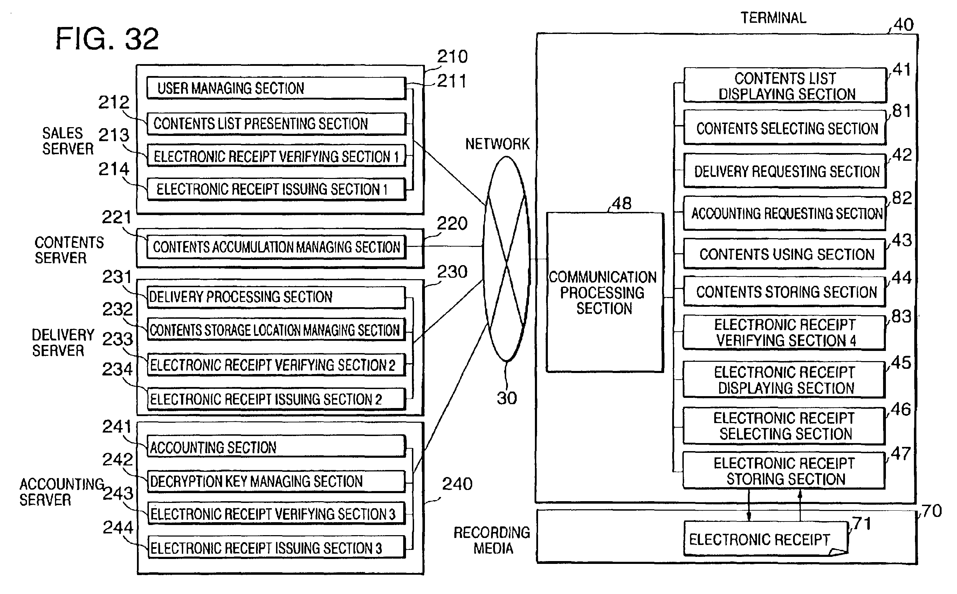

In this system, as FIG. 32 shows, the terminal 40 includes an electronic receipt displaying section 45 for displaying an electronic receipt 71 stored in the electronic receipt storing section 47 or on the recording media 70 and an electronic receipt selecting section 46 for selecting an electronic receipt when a request is made for re-delivery.

The electronic receipt 71 stored on the recording medium 70 is an electronic receipt stored on the recording media 70 for the purpose of backup of the electronic receipt in the electronic receipt storing section 47, and at this storage, it is automatically overwritten if the electronic receipt with the same identification number exists previously on the recording media 70.

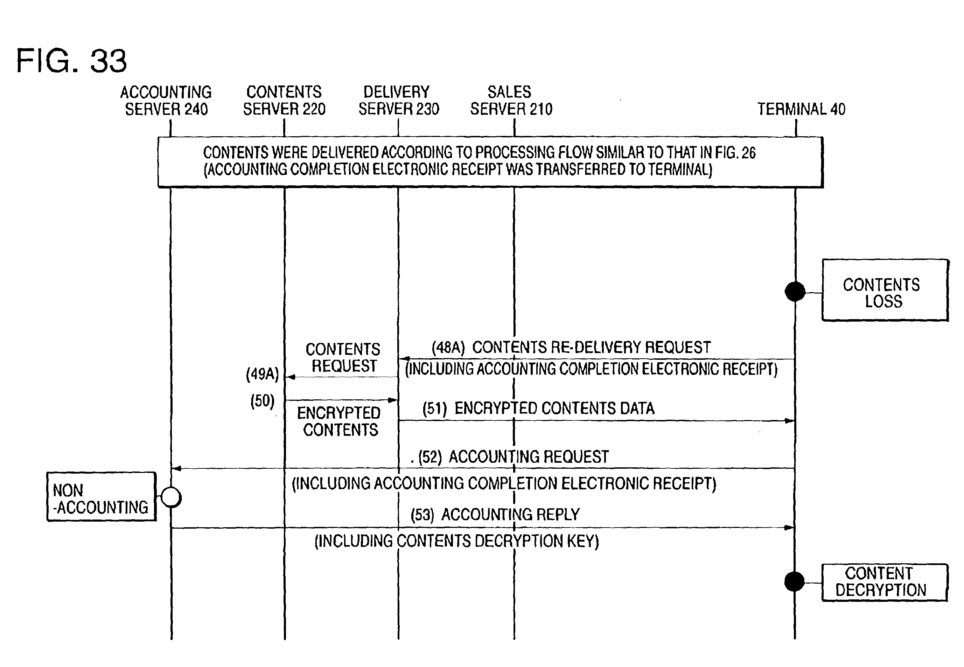

FIG. 33 is an illustration of a re-delivery flow in this system. After the completion of the delivery shown in FIG. 26, when a need for the re-delivery of the contents occurs due to the loss of the contents or the like, the user displays, on the electronic receipt displaying section 45, the accounting completion electronic receipt stored in the electronic receipt storing section 47 or the recording media 70 to select wanted contents to be re-delivered after checking the term of validity of the re-delivery or the limited number of times of re-delivery. The electronic receipt selecting section 46 sends as re-delivery request including the selected accounting completion electronic receipt to the delivery server 230 (48A).

Upon receipt of the accounting completion electronic receipt, in the delivery server 230, the electronic receipt verifying section 233 verifies the electronic receipt, and if it confirms the validity thereof, the re-delivery processing section 231 checks, on the basis of the re-delivery permission flag, the limited number of times of re-delivery, the term of validity and others described on the accounting completion electronic receipt, whether or not the re-delivery request satisfies the re-delivery conditions, and if satisfied, makes a request to the contents server 220 for the contents described on the accounting completion electronic receipt (49A) to acquire the encrypted contents from the contents server 220 (50) for transmitting it to the terminal 40 (51). At this time, a new electronic receipt is not sent but only the encrypted contents are re-sent thereto.

Following this, in the terminal 40, the accounting requesting section 82 sends an accounting request with the accounting completion electronic receipt to the accounting sever 240 (52). Upon receipt of the accounting completion electronic receipt, in the accounting server 240, the electronic receipt verifying section 243 verifies the electronic receipt. If the verification shows the validity, the accounting section 241 checks, on the basis of the contents described on the accounting completion electronic receipt, the re-delivery request satisfies the re-delivery conditions, and if it satisfies the re-delivery conditions, skips the accounting (for avoiding the double accounting) and transmits, to the terminal 40, an accounting reply to which appended is a contents decryption key managed by the decryption key managing section 242 and described the electronic receipt (53). The terminal 40 decrypts the contents into a usable condition.

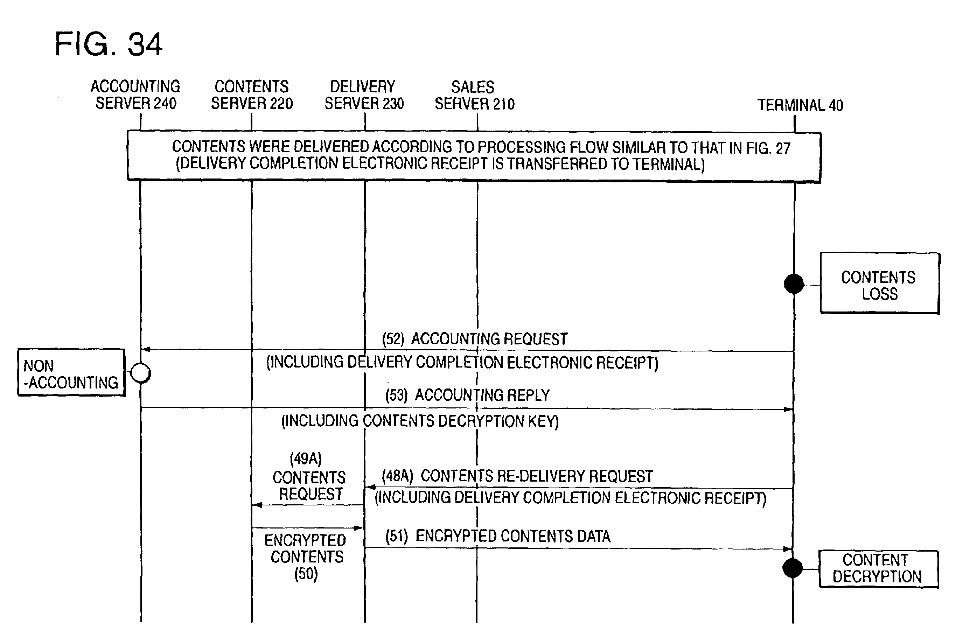

FIG. 34 is an illustration of a re-delivery flow corresponding to that of FIG. 27 showing the ninth embodiment. After the completion of the delivery in FIG. 27, if the loss of the contents occurs, the accounting requesting section 82 of the terminal 40 sends, to the accounting server 240, a re-delivery request in a state where the delivery completion electronic receipt is appended thereto. This delivery completion electronic receipt indicates the accounting completion by means of the accounting completion information or the accounting completion signature. Accordingly, the accounting section 241 of the accounting server 240 skips the accounting and hands over the content decryption key. Following this, the delivery completion electronic receipt is transmitted from the terminal 40 to the delivery server 230, and the terminal 40 receives the re-delivery of the encrypted contents.

As described above, in a system in which a plurality of servers sharing the contents delivery work are arranged in a state distributed through a network, it is possible to achieve the efficient contents re-delivery through the use of the electronic receipt.

### (Tenth Embodiment)

As a tenth embodiment, a description will be given hereinbelow of a case in which a terminal makes an accounting request and a decryption key request through separate messages.

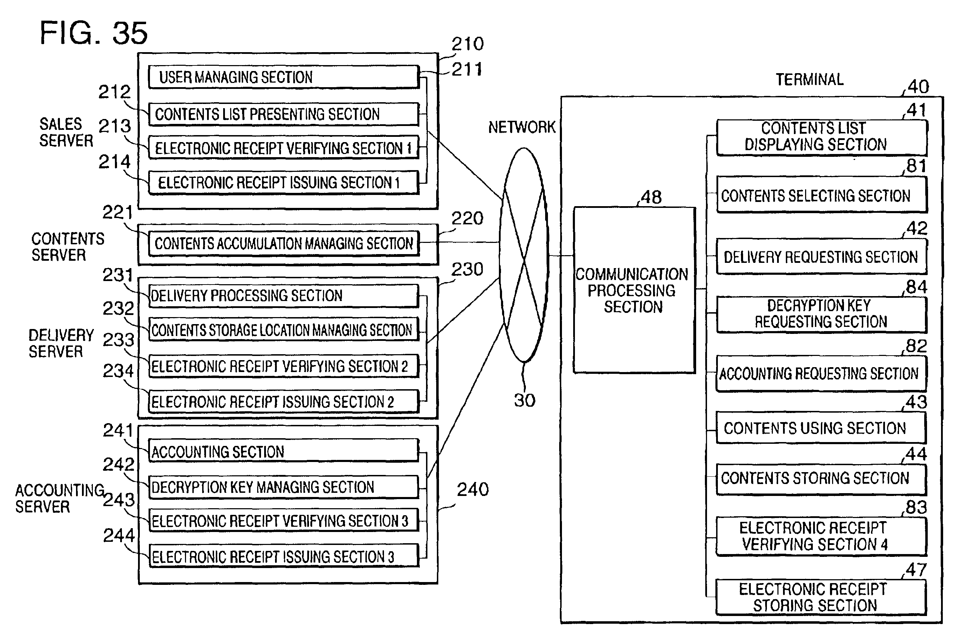

In this system, as FIG. 35 shows, the terminal 40 includes a decryption key requesting section 84 for making a request to the accounting server for a decryption key. The other configuration is the same as that of the eighth embodiment (see FIG. 25).

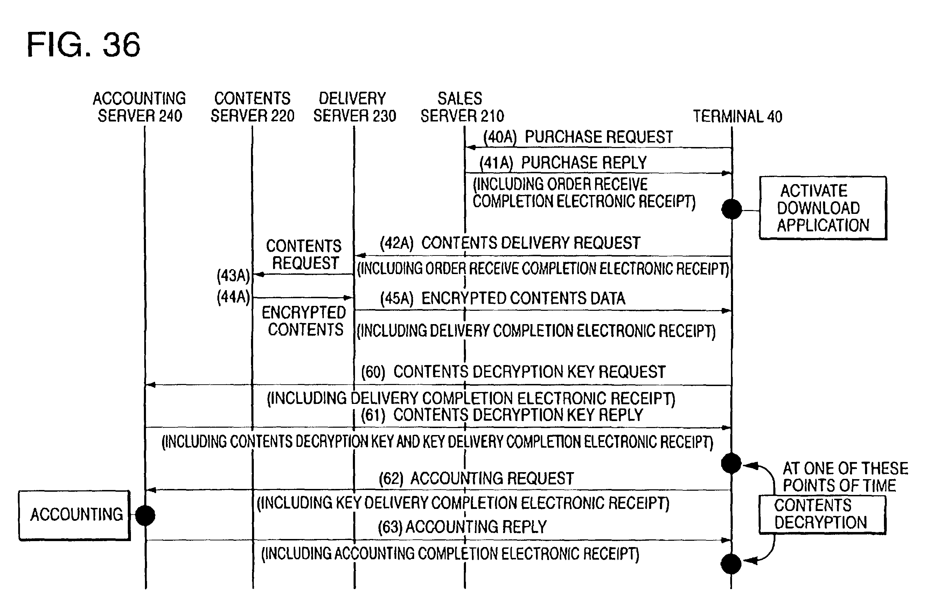

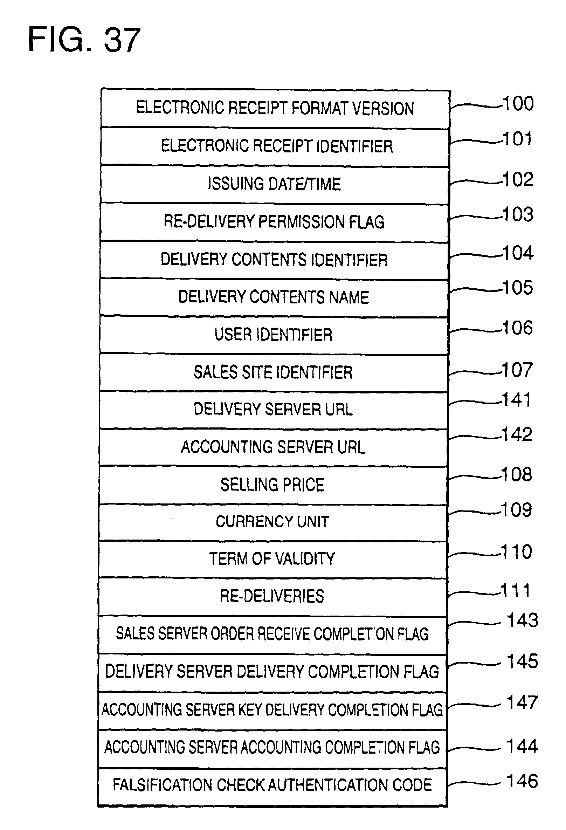

FIG. 36 is a sequence illustration of a delivery flow in this system, where the flow from a purchase request (40A) to the reception (45) of contents data including a delivery completion receipt is the same as that described in the eighth embodiment with reference to FIG. 26. However, as FIG. 37 shows, onto this electronic receipt, there is added an accounting server key delivery completion flag 147 which is set when the accounting server 240 finishes the delivery processing of a decryption key.

When the terminal 40 receives the encrypted contents data and the delivery completion electronic receipt, the encrypted contents data is put in the contents storing section 44, and the decryption key requesting section 84 transmits, to the accounting server 240, a contents decryption key request to which the delivery completion electronic receipt is appended (60).

Upon receipt of the contents decryption key request, in the accounting server 240, the electronic receipt verifying section 243 verifies the delivery completion electronic receipt and, if the verification shows the validity, retrieves, from the decryption key managing section 242, a decryption key for the contents corresponding to the contents identifier described on the electronic receipt. Moreover, the electronic receipt issuing section 244 changes the accounting server key delivery completion flag 147 of the delivery completion electronic receipt to "1", and makes a re-calculation for obtaining a falsification check authentication code, and further generates a key delivery completion electronic receipt with a new falsification check authentication code. The accounting server 240 transmits, to the terminal 40, the decryption key taken out from the decryption key managing section 242 and a contents decryption key reply with the key delivery completion electronic receipt generated by the electronic receipt issuing section 244 (61).

Upon receipt of the contents decryption key reply, in the terminal 40, the accounting requesting section 82 transmits an accounting request with the key delivery completion electronic receipt to the accounting server 240 (62). Upon receipt of the accounting request, in the accounting server 240, the electronic receipt verifying section 243 checks the validity of the key delivery completion electronic receipt, and if the verification shows the validity, the accounting section 241 implements the accounting according to the condition described on the electronic receipt. Moreover, the electronic receipt issuing section 244 changes the accounting server accounting completion flag 144 of the key delivery completion electronic receipt to "1", and makes a re-calculation for obtaining a falsification check authentication code to generate an accounting completion electronic receipt to which a new falsification check authentication code 146 is appended. The accounting server 240 transmits, to the terminal 40, an accounting reply with the accounting completion electronic receipt generated by the electronic receipt issuing section 244 (63).

In the terminal 40, at the time of the reception (61) of the contents decryption key reply including the contents decryption key, or at the time of the reception (63) of the accounting reply, the decryption of the contents becomes possible. The selection of the initiation time of the contents decryption depends on terminal arrangement or system requirements.

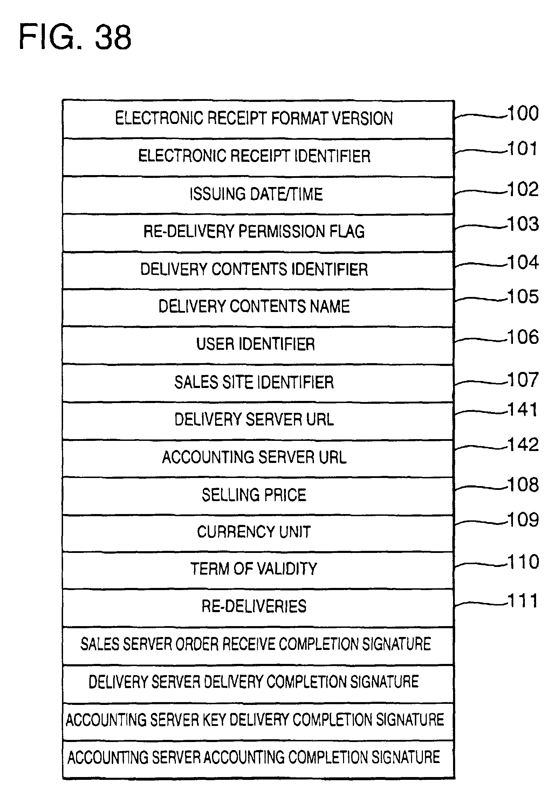

FIG. 38 is an illustration of an electronic receipt format to be taken for when a signature, in place of the processing completion flag, is added onto an electronic receipt. Naturally, it is also possible to use both the processing completion information and the signature.

In this system, since an accounting request is transmitted from the terminal to the accounting server after the arrival of a decryption key at the terminal, the accounting server can confirm the arrival of the decryption key at the terminal and further conduct the accounting. Accordingly, even if some trouble occurs, it is possible to avoid the event that the terminal cannot decrypt the contents when the accounting reaches completion.

### (Eleventh Embodiment)

As an eleventh embodiment, a description will be given hereinbelow of re-delivery processing on the contents delivered according to the tenth embodiment.

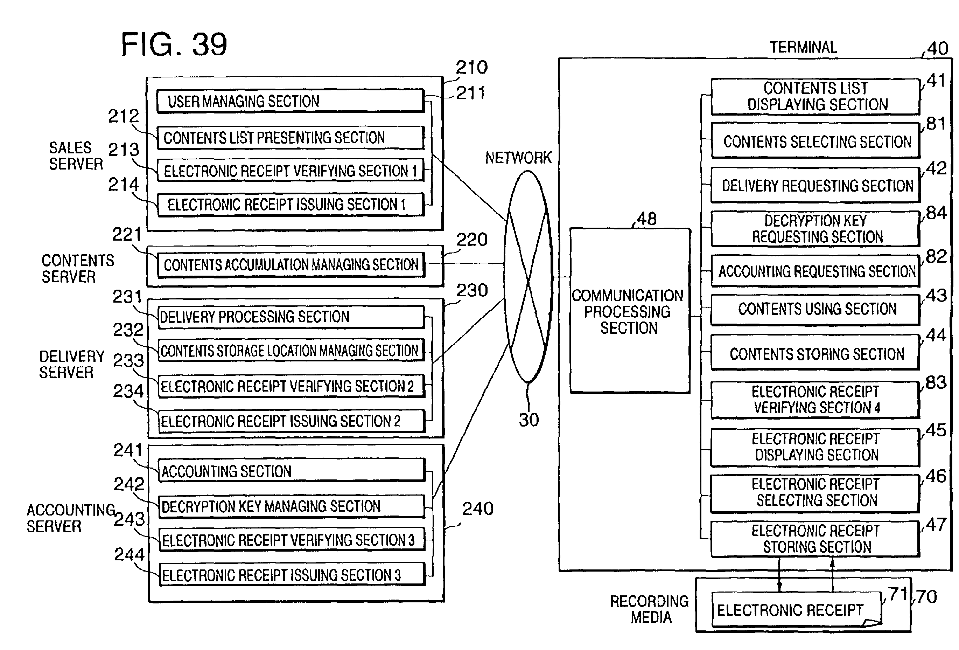

FIG. 39 is an illustration of a configuration of this system. The difference from the tenth embodiment (FIG. 35) is that the terminal 40 includes an electronic receipt displaying section 45 for displaying an electronic receipt 71 and an electronic receipt selecting section 46 for selecting an electronic receipt on a re-delivery request.

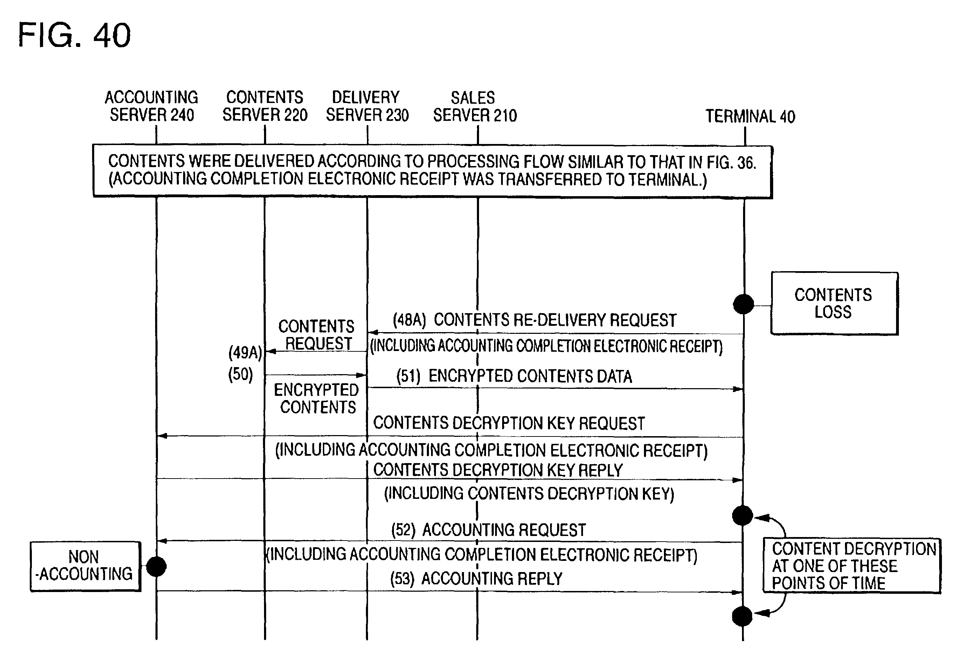

FIG. 40 is an illustration of a re-delivery flow in this system. After the completion of the contents delivery according to the processing flow shown in FIG. 36, if a need for the re-delivery of the contents occurs because of the loss of the contents or the like, a contents re-delivery request including the accounting completion electronic receipt on the re-deliver-desired contents selected in the electronic receipt selecting section 46 is given to the delivery server 230, and only the encrypted contents are again sent from the contents server 220 to the terminal 40.

Following this, the decryption key requesting section 84 of the terminal 40 sends an accounting completion electronic receipt appended contents decryption key request to the accounting server 240, and the accounting server 240 sends back a contents decryption key reply including only the requested contents decryption key to the terminal 40. The accounting requesting section 82 of the terminal 40 sends an accounting completion electronic receipt appended accounting request to the accounting server 240, and the accounting server 240 skips the accounting and sends back an accounting reply to the terminal 40.

This procedure enables the re-delivery of the contents in a case in which the accounting request and the decryption key request are separated from each other.

### (Twelfth Embodiment)

As a twelfth embodiment, a description will be given hereinbelow of a case of making an accounting request after a terminal makes an accounting ready request to an accounting server.

This accounting ready request is made in order to, when the terminal makes a request for settlement processing through a network to the server, confirm the fact that the server is in a normal operation and match the operations of the terminal and the server with each other. The configuration of this system is the same as that according to the tenth embodiment (FIG. 35) or the eleventh embodiment (FIG. 39).

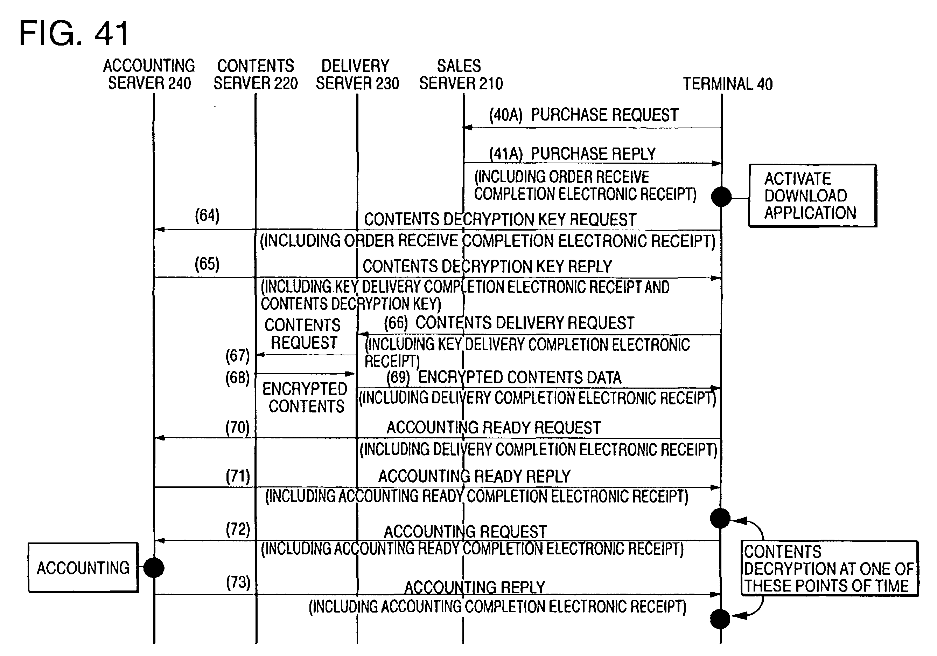

FIG. 41 is an illustration of a delivery flow in this case. A purchase request is issued from the terminal 40 to the sales server 210 (40A), a purchase reply including an order receive completion electronic receipt is transmitted from the sales server 210 to the terminal 40 (41).

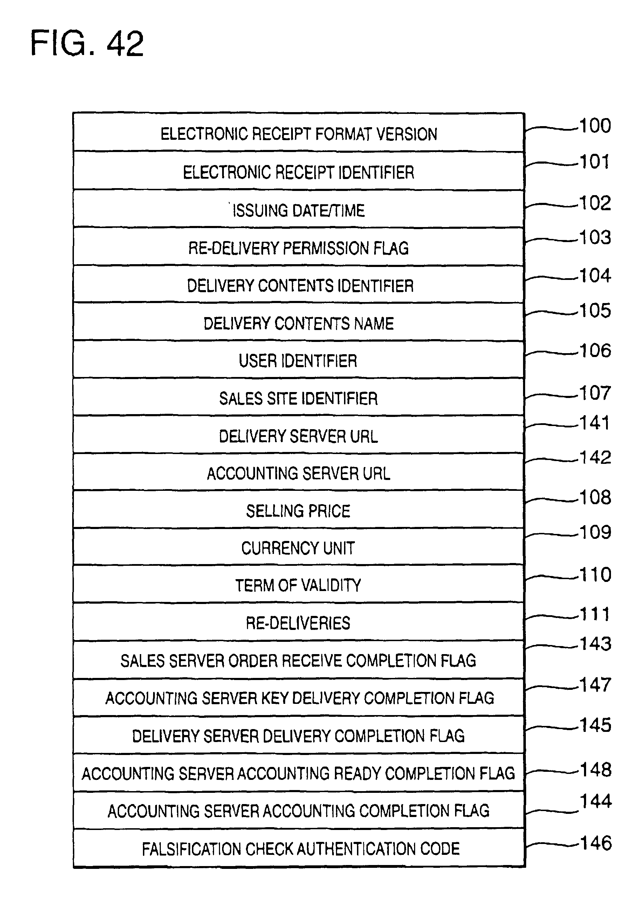

As FIG. 42 shows, this electronic receipt includes a sales server order receive completion flag 143, an accounting server key delivery flag 147, a delivery server delivery completion flag 145, an accounting server accounting ready completion flag 148 and an accounting server accounting completion flag 144. On the order receive completion electronic receipt, only the sales server order receive completion flag 143 is set at "1".

On the reception of the order receive completion electronic receipt, the terminal 40 activates an application for the download of the contents. The decryption key requesting section 84 of the terminal 40 transmits, to the accounting server 240, a contents decryption key request to which the order receive completion electronic receipt is appended (64).

Upon receipt of the contents decryption key request, the accounting server 240 sets the accounting server key delivery flag 147 of the order receive completion electronic receipt to "1" to generate a key delivery completion electronic receipt, and transmits, to the terminal 40, a contents decryption key reply to which appended are the key delivery completion electronic receipt and the contents decryption key (65).

When the terminal 40 receives the decryption key reply, the delivery requesting section 42 transmits, to the delivery server 230, a contents delivery request to which the key delivery completion electronic receipt is appended (66). In response to this, the delivery server 230 acquires the encrypted contents from the contents server 220 (67. 68), and generates a delivery completion electronic receipt, that is, sets the deliver server delivery completion flag 145 of the key delivery completion electronic receipt to "1", and further transmits the encrypted contents data including this delivery completion electronic receipt to the terminal 40 (69).

When the terminal 40 receives the encrypted contents data, the accounting requesting section 82 transmits an accounting ready request including the delivery completion electronic receipt to the accounting server 240 (70). When the accounting server 240 receives the accounting ready request, the electronic receipt issuing section 244 sets the accounting server accounting ready completion flag 148 of the delivery completion electronic receipt to "1" to generate an accounting ready completion electronic receipt, and the accounting section 241 transmits an accounting ready reply including this accounting ready completion electronic receipt to the terminal 40 at the accounting ready made stage.

When the terminal 40 receives the accounting ready reply, the accounting requesting section 82 transmits an accounting request including the accounting ready completion electronic receipt to the accounting server 240.

When the accounting server 240 receives the accounting request, the accounting section 241 conducts the accounting, and the electronic receipt issuing section 244 sets the accounting server accounting completion flag 144 of the accounting ready completion electronic receipt to "1" to generate an accounting completion electronic receipt. The accounting section 241 transmits an accounting ready reply including this accounting ready completion electronic receipt to the terminal 40.

Thus, after an accounting ready request is made from the terminal 40 to the accounting server 240, an accounting request is made, thereby accomplishing smooth accounting in the accounting server 240.

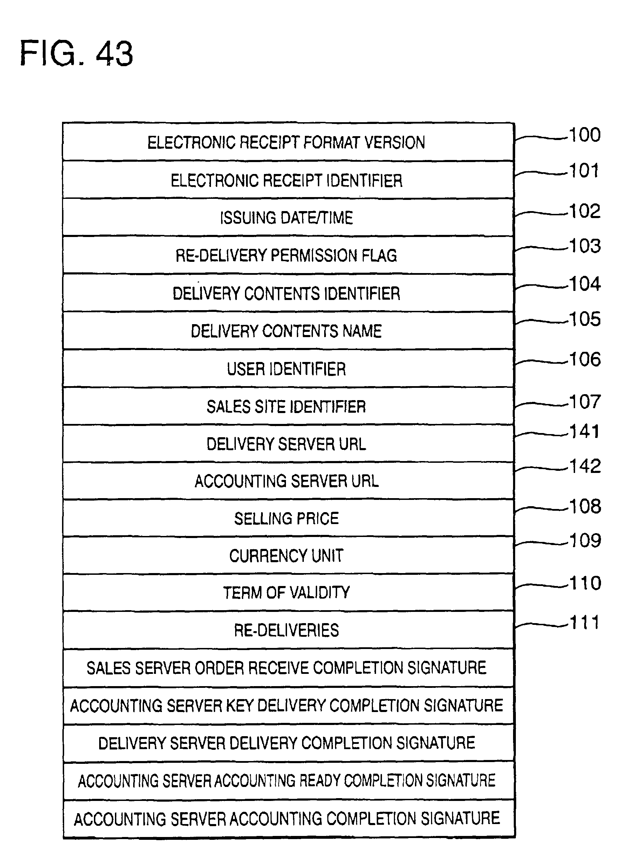

FIG. 43 is an illustration of an electronic receipt format to be taken in a case in which, in place of the processing completion information flag, a signature is given to an electronic receipt. It is also possible to use the procession completion information and the signature with respect to an electronic receipt.

### (Thirteenth Embodiment)

As a thirteenth embodiment, a description will be given hereinbelow of a system in which an accounting server issues a decryption title deed (decryption claim certificate) forming another electronic data in addition to an electronic receipt.

This decryption title deed is for certifying the right of a user in decrypting encrypted contents for regeneration and use, and allows the use of the contents in the terminal 40.

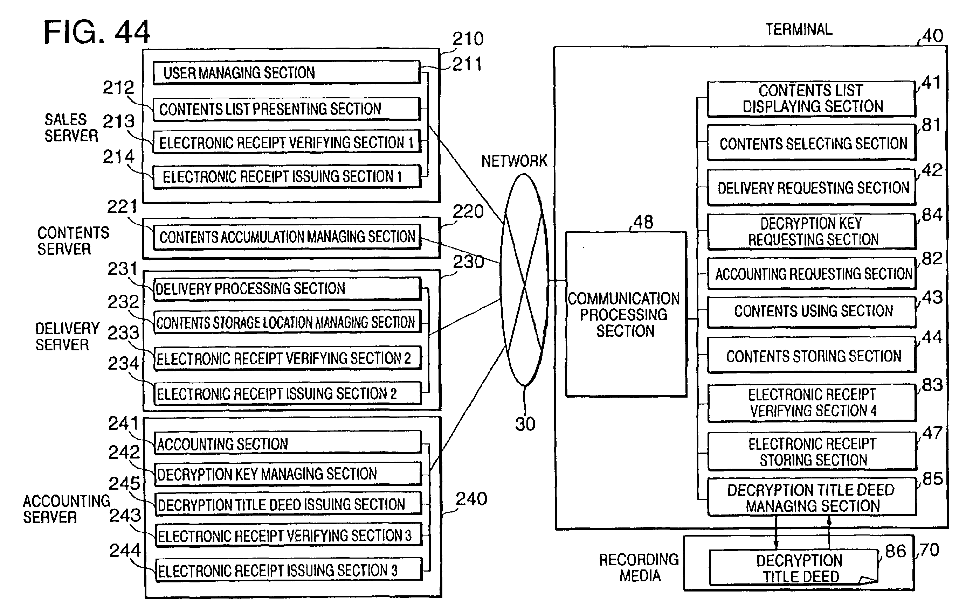

In this system, as FIG. 44 shows, the accounting server 240 includes a decryption title deed issuing section 245 for issuing a decryption title deed, and the terminal 40 includes a decryption title deed managing section 85 for writing a received decryption title deed 86 in recording media 70 and for managing it. The other configuration is the same as that of the tenth embodiment (FIG. 35).

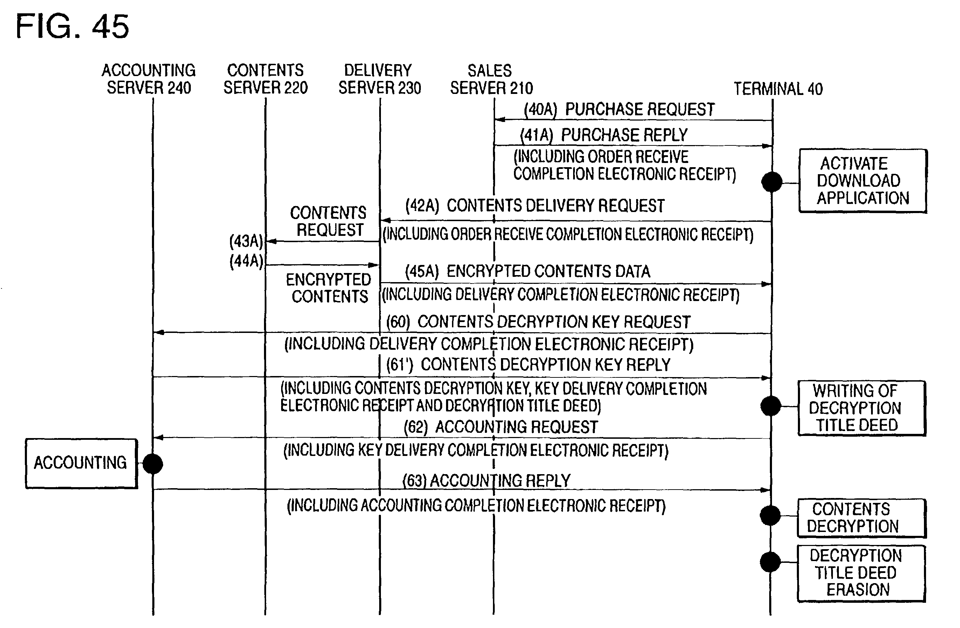

FIG. 45 is an illustration of a delivery flow in this system. The difference of this procedure from the delivery flow (FIG. 36) according to the tenth embodiment is that, when receiving a contents decryption key request (60), the accounting server 240 transmits, to the terminal 40, a decryption title deed issued by the decryption title deed issuing section 245, together with a contents decryption key and a key delivery completion electronic receipt, as a contents decryption key reply (61').

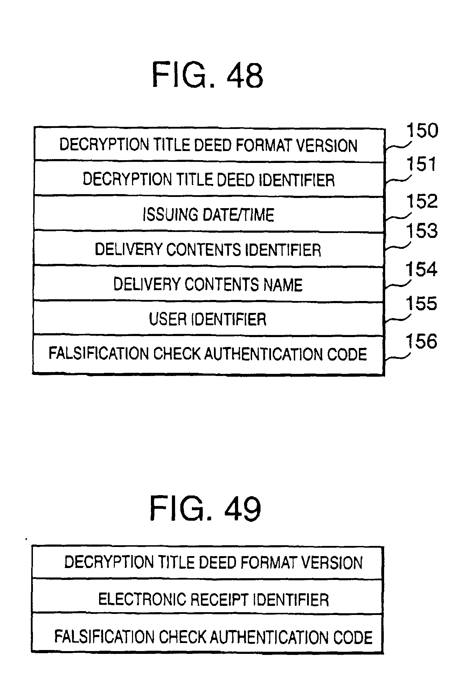

As FIG. 48 shows, on the decryption title deed, the decryption title deed issuing section 245 describes a decryption title deed format version 150, a decryption title deed identifier 151, issuing data/time 152, a delivery contents identifier 153, a delivery contents name 154, a user identifier 155 and a falsification check authentication 156.

Upon receipt of this contents decryption key reply, in the terminal 40, the decryption title deed managing section 85 writes the received decryption title deed on recording media 70 and manages it, and the accounting requesting section 82 transmits an accounting request including the key delivery completion electronic receipt to the accounting server 240. In response to this accounting request, the accounting server 240 conducts the accounting and transmits an accounting reply including an accounting completion electronic receipt to the terminal 40. When the terminal 40 decrypts the contents in response to the accounting reply, the decryption title deed managing section 85 erases the decryption title deed.

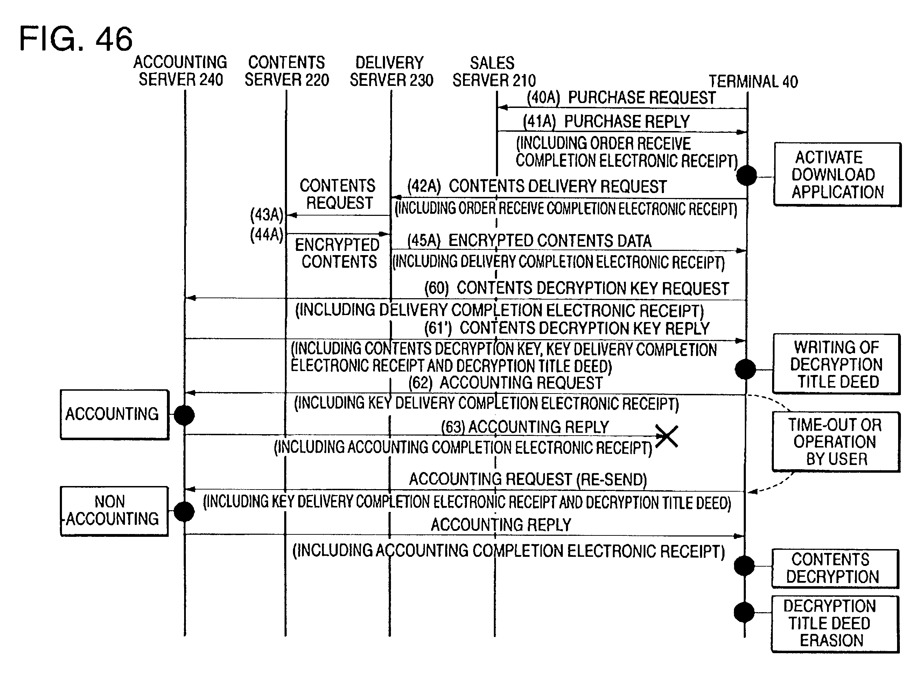

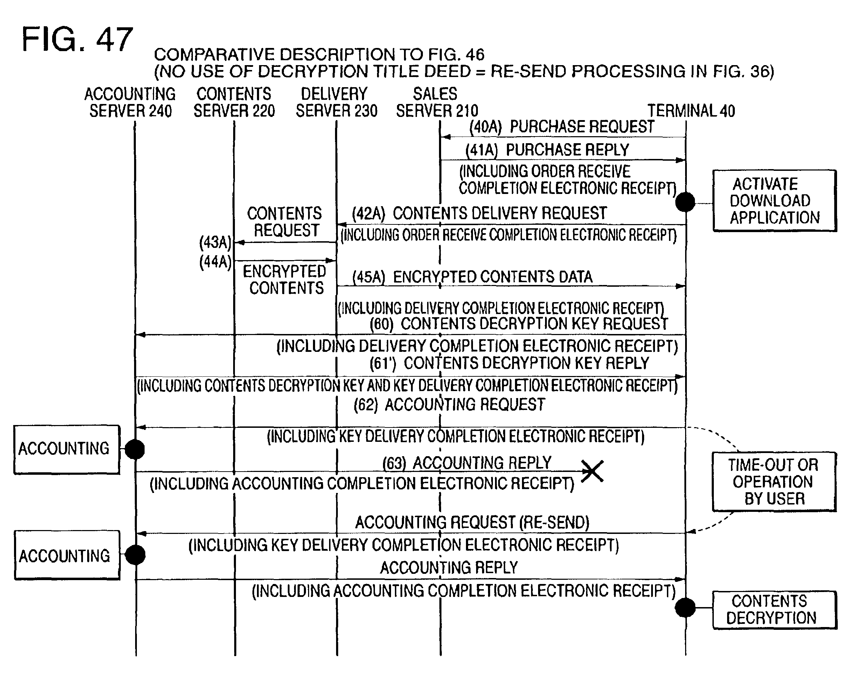

That is, the decryption title deed is held until the contents decryption reaches completion and is erased after the decryption. Accordingly, the decryption title deed is not put to use when the contents are delivered in the normal condition. However, there is a possibility that the accounting replay to the accounting request does not reach the terminal 40 for some reason (deterioration of radio communication function, or the like), for example, as shown in FIG. 46. At this time, if a reply waiting timer of the terminal 40 enters a time-out state or if a user conducts some operation (initiation of communication, or the like) after the cutoff of communication, the accounting requesting section 82 re-sends the accounting request to the accounting server 240. In this case, the accounting requesting section 82 appends a key delivery completion electronic receipt and a key delivery completion electronic receipt to the accounting request to be re-sent.

When the decryption title deed is appended to the accounting request message, the accounting section 241 of the accounting server 240 verifies the falsification check authentication code 156 of the decryption tile deed and then sends back an accounting reply including the accounting completion electronic receipt to the terminal 40 in a non-accounting condition.

Thus, since the decryption title deed is appended to the accounting request to be re-sent, it is possible to prevent the double accounting. In this case, if the accounting server 240 receives an accounting request in a state where the decryption title deed is not included therein, the double accounting takes place as shown in FIG. 47. In order to avoid such a situation, the accounting server 240 is required to fully seize and manage the purchase state in the terminal 40. However, the employment of the decryption title deed eliminates the need for the management in the accounting server 240. That is, the decision as to whether or the terminal 40 has finished the decryption processing can be made on the basis of only whether or not the decryption title deed remains.

As described above, in a case in which the purchase processing sequence is set such that the decryption processing is conducted after the accounting, a state in which the accounting finishes and non-decryption occurs, the decryption title deed remains on the recording media; therefore, the user can again make the decryption request in a valid but no-accounting condition, which more surely contributes to securing the user's right (the right of decrypting the encrypted contents for the reproduction and use thereof).

In addition, the employment of the decryption title deed enables the omission of the purchase state management on the server side.

Still additionally, in a manner that the decryption title deed is written in a memory or recording media inaccessible through an external operation by the terminal user and the decryption processing and decryption title deed erasing are automatically conducted as integrated processing in the interior of the terminal, it is possible to prevent the decryption title deed from being illegally used by user's illegal operation. The integrated processing signifies that the programs for the decryption processing and the decryption title deed erase processing are integrated with each other so that the decryption becomes valid after the completion of the erase processing or a flag indicative of the completion of the erase processing is set to permit the decryption only when the flag is in the set condition.

It is also appropriate that, as FIG. 49 shows, the decryption title deed comprises a decryption title deed format version, an electronic receipt identifier and a falsification check authentication code 156.

### (Fourteenth Embodiment)

As a fourteenth embodiment, a description will be given hereinbelow of a case in which a delivery server issues a decryption title deed.

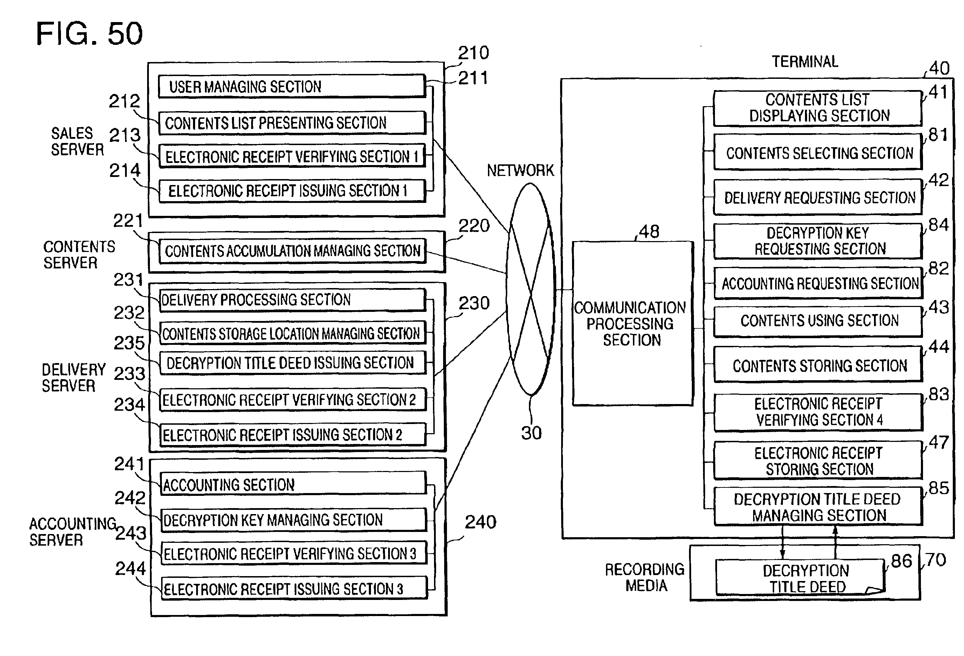

In this system, as FIG. 50 shows, the delivery server 230 includes a decryption title deed issuing section 235. The contents of the decryption title deed to be issued are the same as those in the thirteenth embodiment (FIG. 48 or 49).

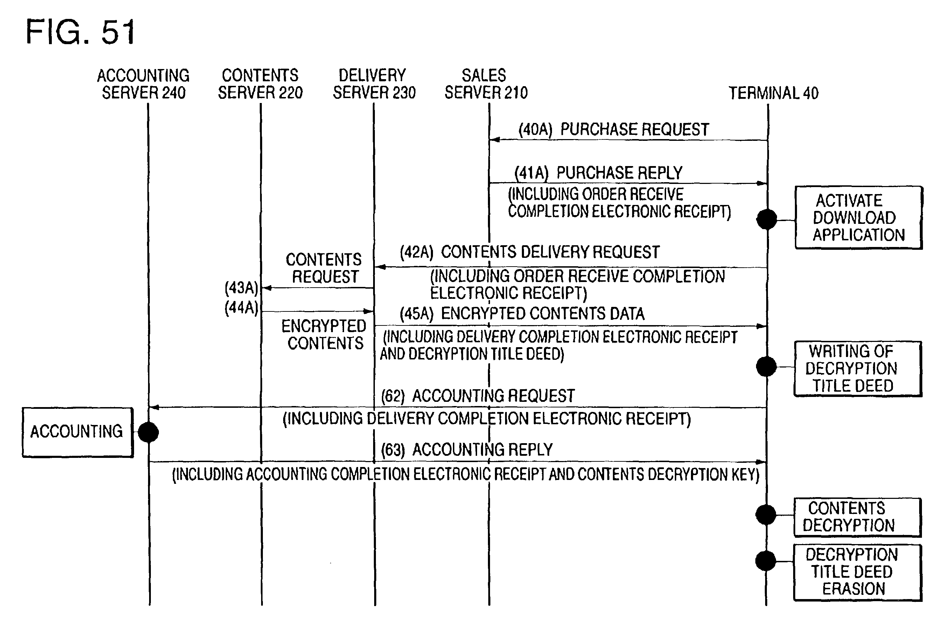

FIG. 51 is an illustration of a delivery flow of this system. This corresponds to the delivery flow according to the eighth embodiment (FIG. 26). When transmitting encrypted contents to the terminal 40, the delivery server 230 transmits a decryption title deed together with the encrypted contents data or together with a delivery completion electronic receipt after the completion of the transmission of the encrypted contents data. The decryption title deed managing section 85 of the terminal 40 writes the received decryption title deed in the recording media 70 and manages it.

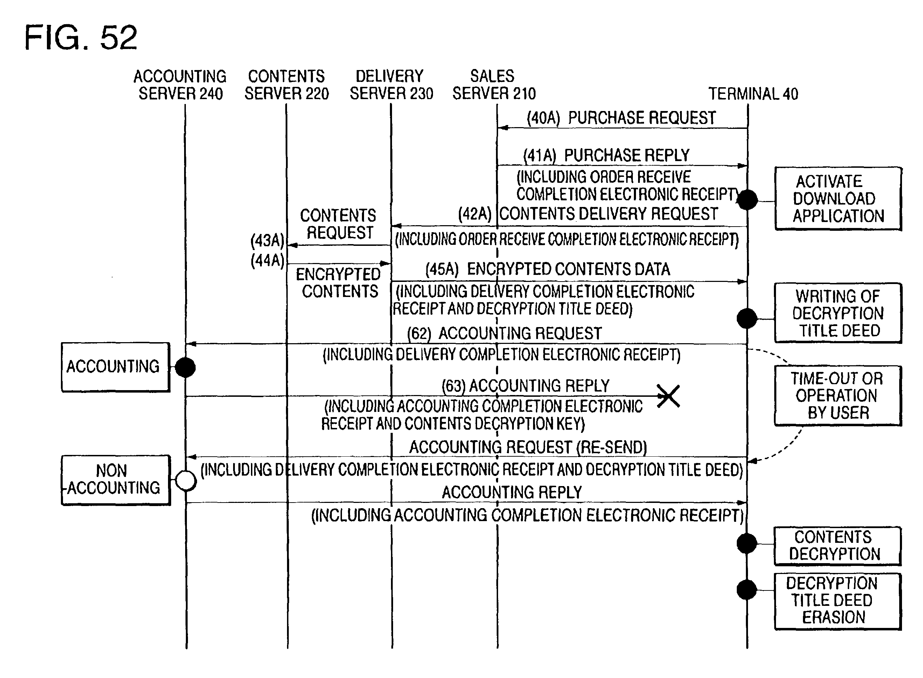

FIG. 52 is an illustration of the use of the decryption title deed. If an accounting request including an accounting completion electronic receipt and a contents decryption key transmitted by the accounting server 240 in response to an accounting request from the terminal 40 does not reach the terminal 40, the terminal 40 re-sends the accounting request together with a delivery completion electronic receipt and a decryption title deed. The accounting server 240 transmits the accounting reply including the accounting completion electronic receipt and the contents decryption key to the terminal 40 without double accounting.

Thus, in a case in which the purchase processing sequence is set such that the decryption processing is made after the accounting, when the accounting reaches completion but the decryption of the contents is difficult, the decryption title deed can protect the user's right.

In addition, the employment of the decryption title deed can eliminate the need for the management of the purchase state of each terminal 40 on the server side. That is, the presence of the decryption title deed in the terminal 40 shows that the decryption is in a state before the completion, while the absence of decryption title deed enables the recognition of the completion of the description.

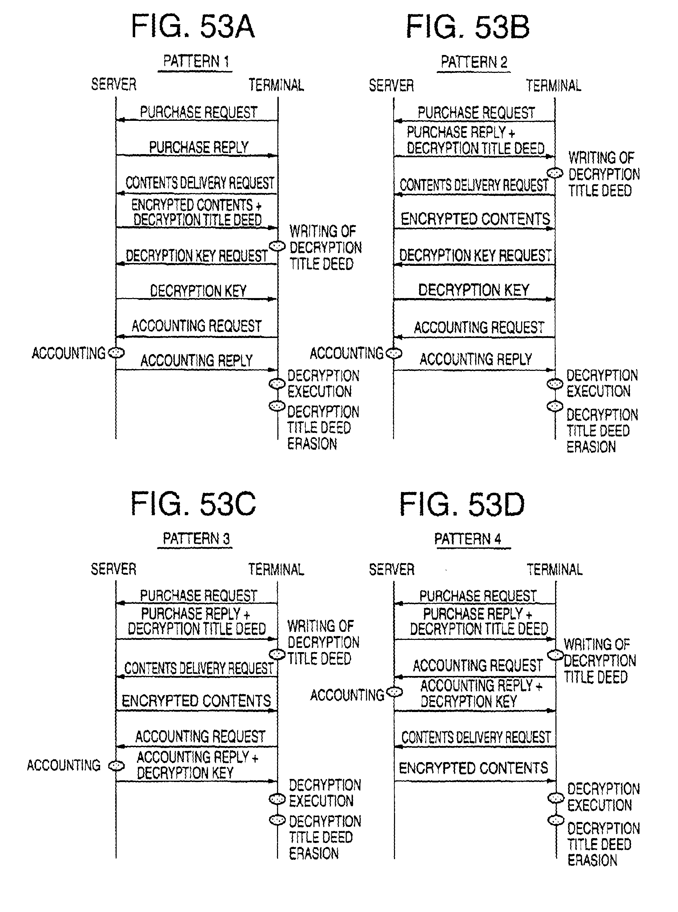

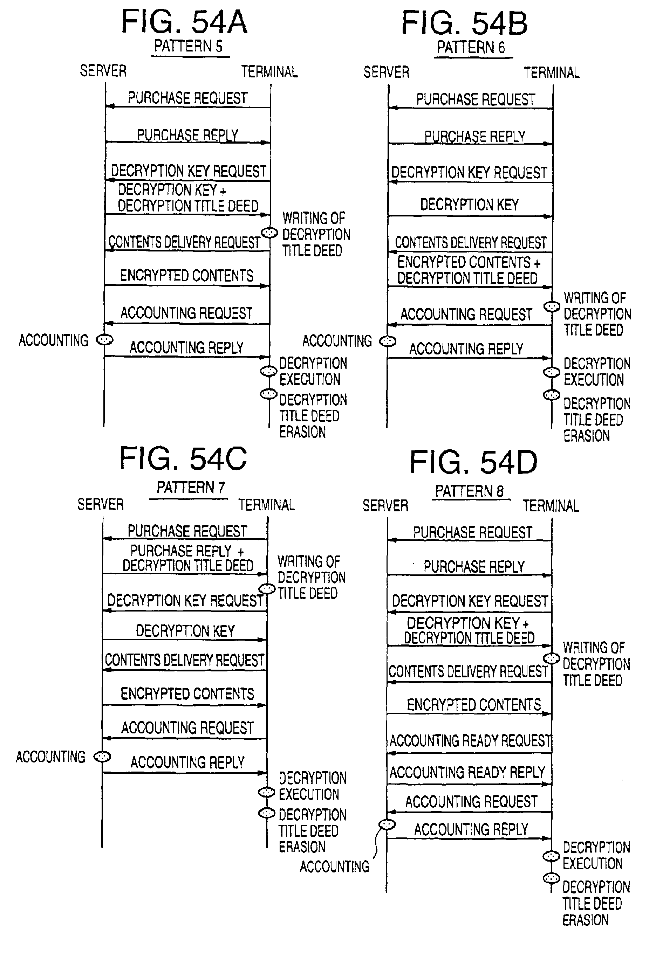

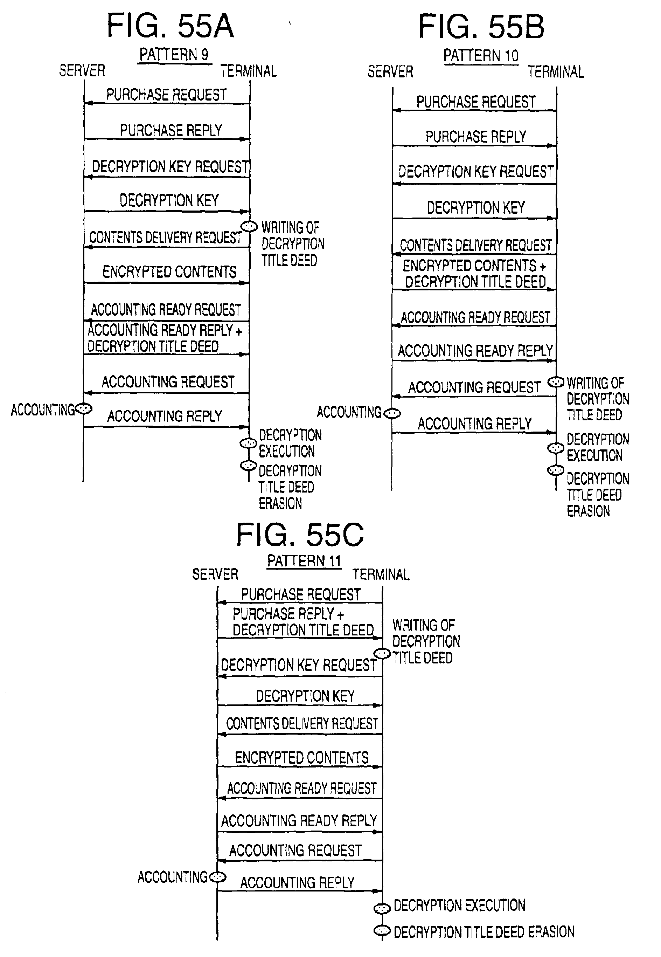

For the timing of the transmission of the decryption title deed from the server side to the terminal 40, various patterns can be taken in addition to the aforesaid pattern shown in FIG. 45 and the aforesaid pattern shown in FIG. 51. FIGs. 53A to 55C show a total of thirteen other patterns. In FIGs. 53A to 55C, the "server" written here also signifies a plurality of servers as well as the cases shown in FIGs. 45 to 47, 51 and 52, but they are shown as one in a state united for the convenience of illustration only.

Although the eighth to fourteenth embodiments have been described about delivery methods in systems comprising a plurality of servers, these methods can be considered as methods in processing sections of the servers, and are applicable irrespective of the number of servers.

As obvious from the above description, since the contents delivery methods according to the present invention utilize an electronic receipt and/or decryption title deed which are electronic data, it is possible to enhance the efficiency of the delivery processing or re-delivery processing of contents.

With the methods, it is possible to reduce the number of times of communication between the user terminal and the server(s), and to achieve high-security and high-reliability contents delivery/re-delivery processing with simple terminal operations.

In addition, also in a system in which a plurality of servers arranged in a state distributed through a network conduct the contents delivery while sharing the work, it is possible to accomplish the delivery/re-delivery of contents with high security and high efficiency.

## Claims

1. A contents delivery method of delivering contents from a server through a network to a terminal, when receiving the delivery of said contents, said terminal retaining an electronic receipt including at least its own identifier, an identifier of said contents purchased, an identifier of said terminal or a user possessing said terminal and information on purchase or issuing date/time, issued by said server, and when making a request to said server for re-delivery of said contents, said terminal sending said electronic receipt to said server.

2. The contents delivery method according to claim 1, wherein said server transmits said electronic receipt to said terminal when receiving a delivery completion notification from said terminal to which said contents are delivered.

3. The contents delivery method according to claim 2, wherein said server does not issue said electronic receipt when receiving a delivery completion notification from said terminal to which said contents are re-delivered.

4. The contents delivery method according to claim 2, wherein, when receiving a delivery completion notification from said terminal to which said contents are re-delivered, said server newly issues said electronic receipt and invalidates the old electronic receipt.

5. The contents delivery method according to claim 1, wherein said server retains data of said electronic receipt issued as a receipt entity and, when receiving an electronic receipt from said terminal which makes a request for re-delivery of said contents, collates the received electronic receipt with said receipt entity for verifying said electronic receipt.

6. The contents delivery method according to claim 1, wherein said server issues said electronic receipt to which an authentication code (MAC) is appended.

7. The contents delivery method according to claim 6, wherein said authentication code is obtained by making a hash calculation using a one-way function and an encryption with respect to data of said electronic receipt.

8. The contents delivery method according to claim 6, wherein said server retains only said authentication code of said electronic receipt issued, and when receiving an electronic receipt from said terminal which makes a request for re-delivery of said contents, collates an authentication code appended to said electronic receipt with the retained authentication code for verifying said electronic receipt.

9. The contents delivery method according to claim 6, wherein, when receiving an electronic receipt from said terminal which makes a request for re-delivery of said contents, said server collates an authentication code generated from the received electronic receipt with said authentication code appended to said electronic receipt for verifying said electronic receipt.

10. The contents delivery method according to claim 1, wherein, when receiving said electronic receipt from said server, said terminal transmits, to said server, confirmation information representative of the fact that said electronic receipt arrives thereat.

11. The contents delivery method according to claim 10, wherein said terminal transmits the received electronic receipt as said confirmation information to said server.

12. The contents delivery method according to claim 10, wherein said terminal transmits an authentication code appended to the received electronic receipt as said confirmation information to said server.

13. The contents delivery method according to claim 10, wherein said terminal transmits an identifier of the received electronic receipt said confirmation information to said server.

14. The contents delivery method according to claim 1, wherein said server issues said electronic receipt, on which a re-delivery condition is described, to said terminal.

15. The contents delivery method according to claim 14, wherein the number of times of re-delivery is limited as said re-delivery condition.

16. The contents delivery method according to claim 14, wherein a term of validity is set with respect to said electronic receipt as said re-delivery condition.

17. The contents delivery method according to claim 1, wherein said server issues said electronic receipt, on which a price of re-delivery is described, to said terminal.

18. The contents delivery method according to claim 17, wherein said re-delivery price is changed in accordance with the number of times of re-delivery.

19. The contents delivery method according to claim 17, wherein said re-delivery price is changed in accordance with the time elapsed from the initial delivery of said contents.

20. The contents delivery method according to claim 17, wherein said re-delivery price is calculated from a price equation, and an identifier for identifying said price equation and a parameter needed for the calculation are described on said electronic receipt.

21. The contents delivery method according to claim 14, wherein said server sets a plurality of initial prices with respect to contents to be delivered, according to conditions of re-delivery of said contents so that a user is permitted to select one of them.

22. The contents delivery method according to claim 1, wherein a description on said electronic receipt includes a description representative of the occurrence or no occurrence of damage to said contents, and said server makes re-delivery of said contents only when the damage to said contents is recognized from said description on said electronic receipt.

23. The contents delivery method according to claim 1, wherein, when a normal use of said contents is difficult at the time of use of said contents, said terminal automatically transmits said electronic receipt to said server for making a request for re-delivery of said contents.

24. The contents delivery method according to claim 1, wherein, for making a request for refund on said contents delivered, said terminal erases said contents and describes the fact of the erasion on said electronic receipt, and transmits said electronic receipt to said server to make the refund request.

25. The contents delivery method according to claim 1, wherein said server transmits one of said electronic receipt and a tentative electronic receipt to said terminal before delivering said contents to said terminal.

26. The contents delivery method according to claim 1, wherein said server transmits one of said electronic receipt and a tentative electronic receipt when receiving a contents purchase request from said terminal, and on the basis of the reception of said electronic receipt or said tentative electronic receipt, said terminal activates an application taken for receiving the delivery of said contents.

27. The contents delivery method according to claim 25, wherein said server describes a URL indicative of a storage location of the delivered contents in said server, on said electronic receipt or said tentative electronic receipt, and said terminal gains direct access to said URL in making a request for one of delivery and re-delivery of said contents.

28. The contents delivery method according to claim 25, wherein said server describes a URL indicative of a program for conducting delivery processing in said server on said electronic receipt or said tentative electronic receipt, and said terminal makes a request for one of delivery and re-delivery of said contents with respect to said URL.

29. The contents delivery method according to claim 25, wherein said server describes a URL indicative of a program for conducting one of accounting processing and credit processing in said server on said electronic receipt or said tentative electronic receipt, and said terminal makes a request for accounting processing connected with the contents delivery with respect to said URL.

30. The contents delivery method according to claim 1, wherein said terminal transmits a predetermined number of electronic receipts collectively to said server to make a request for delivery of other contents.

31. The contents delivery method according to claim 1, wherein said server conducts accounting processing connected with a contents delivery request through the use of an electronic receipt on contents different from said contents, transmitted from said terminal.

32. A contents delivery method of delivering contents from a server through a network to a terminal, said server including at least a contents list presenting section for generating a list display menu on said contents, a sales processing section for, after said contents are transmitted to said terminal, accepting a contents purchase request signal from said terminal and making a reply, a delivery processing section for receiving a delivery request signal from said terminal and transmitting contents data to said terminal, an accounting section for receiving an accounting request signal from said terminal and conducting accounting, and a communication processing section for making a connection of said contents list presenting section, said sales processing section, said delivery processing section and said accounting section to said network to enable communications with said terminal, wherein each processing section of said server including said sales processing section, said delivery processing section and said accounting section conducts processing corresponding to a request signal from said terminal and then transmits an electronic receipt including processing completion information, related to said each processing section, to said terminal, while said terminal receives said electronic receipt and transmits a request signal, to which said electronic receipt is appended, to said server.

33. The contents delivery method according to claim 32, wherein a common signature obtained by encrypting a hash value of contents of information on said electronic receipt through the use of a private key common to said each processing sections is appended to said electronic receipt, and when receiving a request signal including said common signature appended electronic receipt from said terminal, said each processing section verifies said common signature included in said electronic receipt and examines said processing completion information included in said electronic receipt before conducting its own predetermined processing.

34. The contents delivery method according to claim 32, wherein said processing completion information includes order receive completion information, delivery completion information and accounting completion information.

35. The contents delivery method according to claim 32, wherein said processing completion information includes order receive completion information, delivery completion information, decryption key delivery completion information and accounting completion information.

36. The contents delivery method according to claim 32, wherein said processing completion information includes order receive completion information, delivery completion information, decryption key delivery completion information, accounting ready completion information and accounting completion information.

37. A contents delivery method of delivering contents from a server through a network to a terminal, said server including at least a contents list presenting section for generating a list display menu on said contents, a sales processing section for, after said contents are transmitted to said terminal, accepting a contents purchase request signal from said terminal and making a reply, a delivery processing section for receiving a delivery request signal from said terminal and transmitting contents data to said terminal, an accounting section for receiving an accounting request signal from said terminal and conducting accounting, and a communication processing section for making a connection of said contents list presenting section, said sales processing section, said delivery processing section and said accounting section to said network to enable communications with said terminal, wherein each processing section of said server including said sales processing section, said delivery processing section and said accounting section conducts processing corresponding to a request signal from said terminal and then transmits, to said terminal, an electronic receipt to which appended is a unique processing section signature obtained by encrypting a hash value of information contents on said electronic receipt through the use of a private key unique to said each processing section, while said terminal receives said electronic receipt and transmits a request signal, to which said electronic receipt is appended, to said server.

38. The contents delivery method according to claim 37, wherein, when receiving a request signal including said unique processing section signature appended electronic receipt from said terminal, said each processing section verifies said unique processing section signature included in said electronic receipt on the basis of a public key opened to the public by said each processing section before conducting its own predetermined processing.

39. The contents delivery method according to claim 37, wherein said unique processing section signature includes order receive completion signature, delivery completion signature and accounting completion signature.

40. The contents delivery method according to claim 37, wherein said unique processing section signature includes order receive completion signature, delivery completion signature, decryption key delivery completion signature and accounting completion signature.

41. The contents delivery method according to claim 37, wherein said unique processing section signature includes order receive completion signature, delivery completion signature, decryption key delivery completion signature, accounting ready completion signature and accounting completion signature.

42. The contents delivery method according to claim 32 or 37, wherein said each processing section of said server is arranged as an independent server and connected through said network to the other processing sections

43. The contents delivery method according to claim 32 or 37, wherein, when newly receiving an electronic receipt, said terminal overwrites the new electronic receipt on the previously received electronic receipt.

44. A contents delivery method of delivering contents from a server through a network to a terminal, said server sends, to said terminal, a decryption title deed which certifies that said terminal has a right of conducting decryption processing on encrypted contents, before conducting accounting therein.

45. The contents delivery method according to claim 44, wherein said terminal makes the decryption only when said terminal makes an accounting request to said server and said server makes an accounting reply to said terminal.

46. The contents delivery method according to claim 45, wherein said terminal conducting said decryption processing on said encrypted contents and erases said decryption title deed after said decryption processing is conducted.

47. The contents delivery method according to claim 45, wherein, when making a re-accounting request, said terminal appends said decryption title deed to said accounting request, and when receiving said re-accounting request from said terminal, said server transmits an accounting reply to said terminal without conducting accounting.

48. The contents delivery method according to claim 44, wherein said decryption title deed includes at least a contents identifier, an identifier of one of a user and said terminal and accounting date and time.

49. The contents delivery method according to claim 44, wherein said decryption title deed includes at least an identifier of an electronic receipt.

50. The contents delivery method according to claim 44, wherein a digital signature using a private key of said server is added to said decryption title deed.

51. A server for use in a contents delivery system of delivering contents from said server through a network to a terminal, comprising:
means for issuing an electronic receipt including at least its own identifier, an identifier of contents purchased by said terminal, an identifier of one of said terminal and a user, and information on one of purchase date/time and issuing date/time; and
means for transmitting said electronic receipt to said terminal.

52. A server for use in a contents delivery system of delivering contents from said server through a network to a terminal, comprising:
a contents list presenting section for generating at least a contents list display menu;
a sales processing section for receiving a purchase request signal from said terminal and for making a reply thereto;
a delivery processing section for receiving a delivery request from said terminal and for transmitting contents data to said terminal;
an accounting section for receiving an accounting request signal from said terminal to conduct accounting; and
a communication processing section for making a connection of said contents list presenting section, said sales processing section, said delivery processing section and said accounting section to said network to enable communications with said terminal,
wherein each processing section of said server including said sales processing section, said delivery processing section and said accounting section conducts processing corresponding to a request signal from said terminal and then transmits an electronic receipt including processing completion information, related to said each processing section, to said terminal.

53. A server for use in a contents delivery system of delivering contents from said server through a network to a terminal, comprising:
a contents list presenting section for generating at least a contents list display menu;
a sales processing section for receiving a purchase request signal from said terminal and for making a reply thereto;
a delivery processing section for receiving a delivery request from said terminal and for transmitting contents data to said terminal;
an accounting section for receiving an accounting request signal from said terminal to conduct accounting; and
a communication processing section for making a connection of said sales processing section, said delivery processing section and said accounting section to said network to enable communications with said terminal,
wherein each processing section of said server including said sales processing section, said delivery processing section and said accounting section conducts processing corresponding to a request signal from said terminal and then transmits, said terminal, an electronic receipt to which appended is a unique processing section signature obtained by encrypting a hash value of information contents on said electronic receipt through the use of a private key unique to said each processing section.

54. A server for use in a contents delivery system of delivering contents from said server through a network to a terminal, comprising means for transmits a decryption title deed, which certifies that said terminal has a right of conducting decryption processing on encrypted contents, to said terminal before conducting accounting in said server.

55. A terminal for use in a contents delivery system of delivering contents from a server through a network to said terminal, comprising:
means for retaining an electronic receipt including its own identifier, an identifier of said contents purchased, an identifier of one of said terminal and a user and information on one of purchase date/time and issuing date/time, transmitted from said server when said terminal receives the delivery of said contents from said server; and
means for transmitting said electronic receipt to said server when said terminal makes a request to said server for re-delivery of said contents.

56. The terminal for use in a contents delivery system according to claim 55, further comprising means for transmitting, to said server, a request signal to which said electronic receipt is appended.

57. A computer program which makes a computer, constituting a terminal, realize a contents delivery method of delivering contents from a server through a network to said terminal, comprising:
a step of retaining an electronic receipt including its own identifier, an identifier of said contents purchased, an identifier of one of said terminal and a user, and information on purchase date/time and issuing date/time, issued by said server, in said terminal receiving the delivery of said contents; and
a step of transmitting said electronic receipt to said server when said terminal makes a request for re-delivery of said contents.

58. A computer program which makes a computer, constituting a server, realize a contents delivery method of delivering contents from said server through a network to a terminal, comprising:
a step of transmitting a contents list display menu from said server to said terminal;
a sales step of receiving a purchase request signal from said terminal and of making a reply;
a delivery step of receiving a delivery request signal from said terminal and of transmitting contents data to said terminal;
an accounting step of receiving an accounting request signal from said terminal and of conducting accounting; and
a step of transmitting, to said terminal, an electronic receipt including processing completion information by each of said steps after processing corresponding to said request signal from said terminal is conducted in each of said steps.

59. A computer program which makes a computer, constituting a server, realize a contents delivery method of delivering contents from said server through a network to a terminal, comprising:
a step of transmitting a contents list display menu from said server to said terminal;
a sales step of receiving a purchase request signal from said terminal and of making a reply;
a delivery step of receiving a delivery request signal from said terminal and of transmitting contents data to said terminal;
an accounting step of receiving an accounting request signal from said terminal and of conducting accounting; and
a step of, after processing corresponding to said request signal from said terminal is conducted in each of said steps, transmitting, to said terminal, an electronic receipt to which appended is a unique processing step signature obtained by encrypting a hash value of information contents of said electronic receipt through the use of a private key unique to each of said steps.

60. A computer program which makes a computer, constituting a server, realize a contents delivery method of delivering contents from said server through a network to a terminal, comprising:
a step of transmitting, from said server to said terminal, a decryption title deed which certifies that said terminal has a right of conducting decryption processing on encrypted contents; and
a step of conducting accounting in said server after said decryption title deed is transmitted to said terminal.

61. A contents delivery method of delivering contents from a server through a network to a terminal, when receiving the delivery of said contents, said terminal retaining at least one of electronic data which enables utilization of said contents in said terminal and electronic data which enables reception of re-delivery of said contents from said server, issued by said server, and using said electronic data when making a request for one of the utilization of said contents and the re-delivery of said contents.

62. The contents delivery method according to claim 61, wherein said electronic data for the utilization of said contents in said terminal is a decryption title deed, while said electronic data for said terminal to receive the re-delivery of said contents from said server is an electronic receipt which certifies the fact of purchase of said contents.
